(19) **Europäisches Patentamt**

**European Patent Office**

**Office européen des brevets**

(11) **EP 0 837 582 B1**

(12) **EUROPEAN PATENT SPECIFICATION**

(45) Date of publication and mention
of the grant of the patent:
**12.11.2003 Bulletin 2003/46**

(51) Int Cl.7: **H04L 27/26**

(21) Application number: **97117972.6**

(22) Date of filing: **16.10.1997**

(54) **Symbol synchronization in a DAB receiver**

Symbolsynchronisierung in einem Empfänger von digitalen Tonsignalen

Synchronisation de symbole, dans un récepteur RAN

(84) Designated Contracting States:
**DE FR GB**

(30) Priority: **18.10.1996 JP 27596896**

(43) Date of publication of application:
**22.04.1998 Bulletin 1998/17**

(73) Proprietor: **Alpine Electronics, Inc.**
**Tokyo 141 (JP)**

(72) Inventor: **Nemoto, Hiroyuki**
**Iwaki-city, Fukushima (JP)**

(74) Representative: **Hirsch, Peter, Dipl.-Ing.**
**Klunker Schmitt-Nilson Hirsch**
**Winzererstrasse 106**
**80797 München (DE)**

(56) References cited:
EP-A- 0 829 988            WO-A-96/02989
WO-A-96/19056            WO-A-97/07620
US-A- 5 471 464

• TOURTIER P J ET AL: "MULTICARRIER MODEM FOR DIGITAL HDTV TERRESTRIAL BROADCASTING" , SIGNAL PROCESSING. IMAGE COMMUNICATION,NL,ELSEVIER SCIENCE PUBLISHERS, AMSTERDAM, VOL. 5, NR. 5/06, PAGE(S) 379-403 XP000426711 ISSN: 0923-5965 * Sections 3.4, 3.5, 3.6, 3.8 *

**Description**

**BACKGROUND OF THE INVENTION**

1. Field of the Invention

The present invention relates to a digital audio broadcast receiver (Digital Audio Broadcast: DAB) and, more particularly, to a receiver in digital audio broadcast in which even if a multipath is generated, a DFT window for giving a Fourier transformation execution timing can be set at a position which is not interfered from an adjacent symbol or minimally interfered by the adjacent symbol.

2. Description of the Related Art

Digital audio broadcast (DAB) in which audio signals are converted into digital signals to obtain serial data, the serial data are divided into sets each consisting of 2N digital data, the 2N digital data are divided into N groups each having two bits, N carriers having different frequencies depending on combinations of 1 and 0 of each two bits are 4-phase-PSK-modulated, the modulated signals are frequency-multiplexed to be sent from a transmission station, the frequency-multiplexed phase-modulated signal is received by a receiver and demodulated to be an audio output is proposed. The DAB is being studied for practical use in Europe and the like.

In this DAB scheme, in order to reduce influence of selectivity fading, pieces of information are divided in parallel, and modulation is performed by using a plurality of carriers. As a result, even if any carrier receives fading, influence is reduced as a whole. Basically, the DAB scheme is a frequency division multiplex (FDM: Frequency Division Multiplex) scheme. In a simple FDM, an interval between carriers must be sufficiently large to avoid spectra from overlapping, and good frequency use efficiency cannot be obtained. For this reason, an OFDM (Orthogonal Frequency Division Multiplex) scheme is proposed. In this OFDM, carriers are arranged to satisfy orthogonal conditions and to allow spectra to overlap, good frequency use efficiency can be obtained, and IDFT (Inverse Discrete Fourier Transform) and DFT (Discrete Fourier Transform) operations can be used in a modulator and a demodulator, thereby advantageously obtaining very simple hardware.

(a) Principle of Digital Audio Broadcast by OFDM Scheme

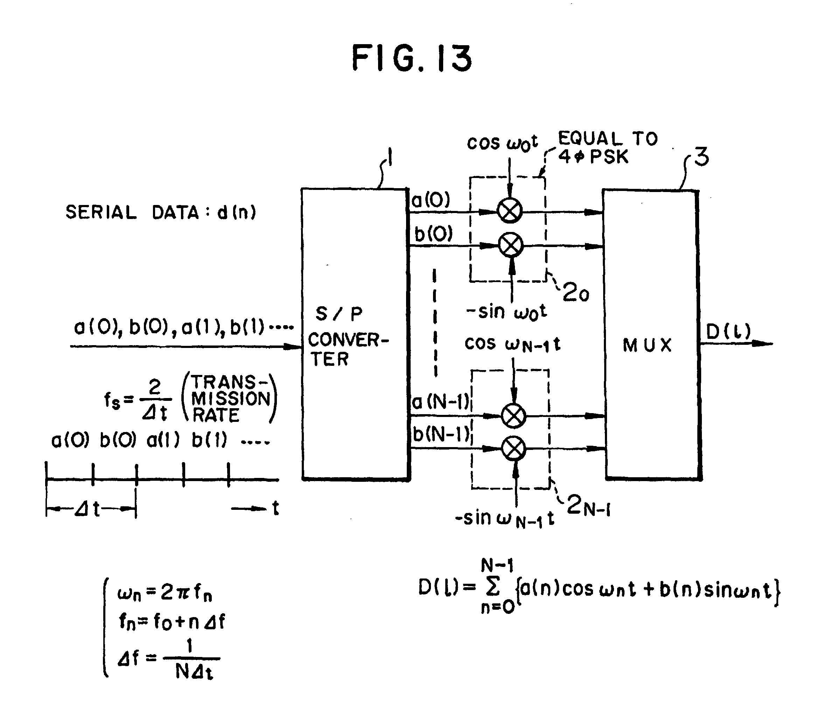

FIG. 13 is a view showing the theoretical arrangement of a transmitter for digital audio broadcast. Reference numeral 1 denotes a serial/parallel converter (S/P converter) for converting serial data d(n) (a(0), b(0), a(1), b(1),...) input at a transmission rate fs (= 2/$\Delta$t) into 2N-bit parallel data; $2_0$ to $2_{N-1}$, N carrier multiplying sections for dividing the (2 x N)-bit parallel data into N groups a(0), b(0),; a(1), b(1);...; a(N-1), b(N-1) each having two bits, multiplying the first bits a(0), a(1),..., a(N-1) of the groups by carriers (cos$\omega_n$t) having frequencies $f_0$ to $f_{N-1}$, and multiplying the second bits b(0), b(1),..., b(N-1) by carriers (-sin$\omega_n$t) having frequencies $f_0$ to $f_{N-1}$; and 3, a frequency multiplexer (MUX) for synthesizing output signals a(n)cos$\omega_n$t and -b(n)sin$\omega_n$t (n = 0 to N-1) from the carrier multiplying sections of the respective groups and frequency-multiplexing the synthesized signal to send a signal D(t).

When output signals from the carrier multiplying sections of the respective groups are synthesized by the frequency multiplexer 3, the carriers having frequencies $f_0$ to $f_{N-1}$ are 4-phase-PSK-modulated by combinations of 1 and 0 of two bits of each group. The output D(t) from the frequency multiplexer 3 is given by:

$$D(t) = \Sigma\{a(n)\cos\omega_n t - b(n)\sin\omega_n t\} \qquad (n = 0 \text{ to } N-1)$$

Note that, when the frequency interval of carriers is represented by $\Delta$f, the (n+1)th carrier frequency fn is given by:

$$fn = f_0 + n\Delta f$$

When a transmission time of 2-bit data is represented by $\Delta$t (transmission rate fs = 2/$\Delta$t), the frequency interval $\Delta$f is given by:

$$\Delta f = 1/N\Delta t$$

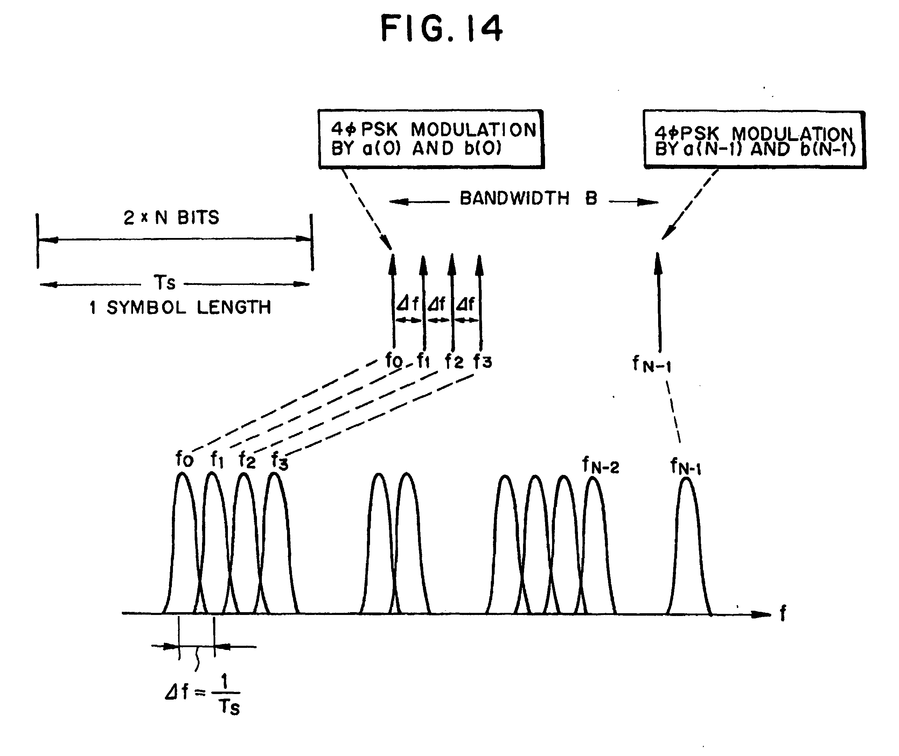

FIG. 14 is a view for explaining the function of the frequency multiplexer 3. N carriers $f_0$ to $f_{N-1}$ having intervals

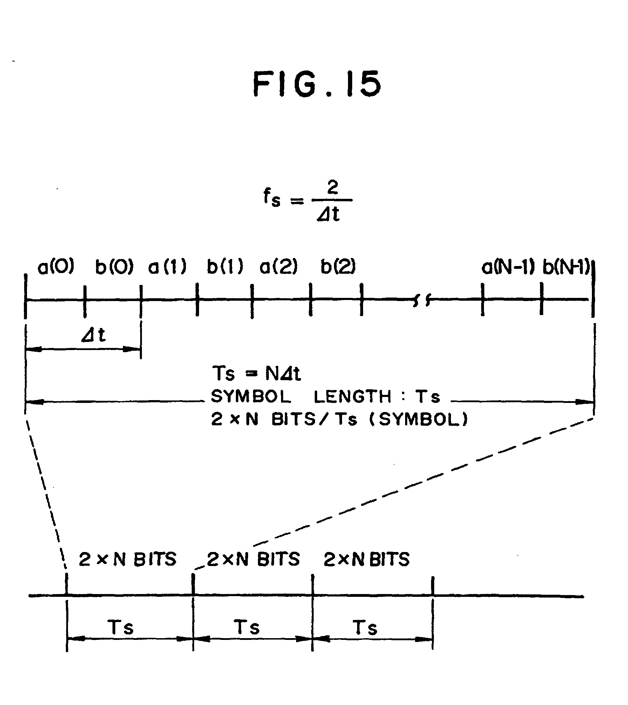

Δf are 4ϕ-PSK-modulated by data a(0), b(0); a(1), b(1);...; a(N-1), b(N-1) of N 2-bit groups, and the modulated signals are frequency-multiplexed to be transmitted. FIG. 15 is a view for explaining a symbol. One symbol consists of 2xN bits. When the time length of one symbol is represented by Ts, the following equations can be obtained:

$$Ts = N\Delta t$$

$$\Delta f = 1/Ts$$

Every symbol (2×N bits) is subjected to 4ϕPSK modulation, and the modulated signals are frequency-multiplexed, thereby sequentially transmitting frequency multiplication signals D(t).

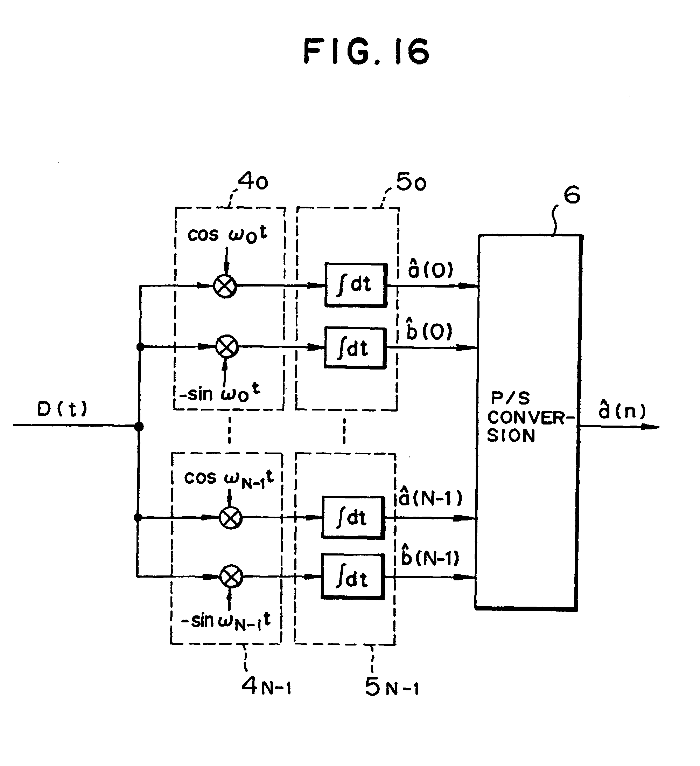

FIG. 16 is a view showing a theoretical arrangement of a receiver for digital audio broadcast. Reference numerals $4_0$ to $4_{N-1}$ denote N carrier multiplying sections for multiplying the received signal D(t) by carriers ($\cos\omega_n t$, $-\sin\omega_n t$, n = 0 to N-1) having frequencies $f_0$ to $f_{N-1}$; $5_0$ to $5_{N-1}$, integrators for integrating outputs from the multiplying sections to demodulate data; and 6, a parallel/serial converter (P/S converter) for converting 2×N-bit parallel data into serial data.

The integrators $5_0$ to $5_{N-1}$ perform the following arithmetic operation to an input signal D(t):

[Equation 1]

$$\int_0^{\frac{1}{\Delta f} \cdot m\Delta t} D(t)\cos(\omega_m t)dt = \frac{N\Delta t}{2}a(m) = \frac{T_s}{2}a(m)$$

$$\therefore a(m) = \frac{2}{T_s}\int_0^{\frac{1}{\Delta f}} D(t)\cos\omega_m t \, dt$$

to demodulate data a(0), b(0); a(1), b(1);...; a(N-1), b(N-1).

(b) OFDM Modulation Scheme using DFT

In order to generate a baseband signal D(t) of OFDM, N 4ϕPSK modulators are required. In addition, N 4ϕPSK demodulators are required to demodulate the baseband signal D(t). When the number N is large, this scheme is not in practical use. Therefore, a method of simply performing modulation/demodulation by using DFT will be described below.

(b-1) Arrangement of Modulator

A baseband signal of OFDM is expressed by the following equation:

[Equation 2]

$$D(t) = \sum_{k=0}^{N-1} \left\{ a(k)\cos\omega_k t - b(k)\sin\omega_k t \right\} \tag{1}$$

When d(k) = a(k) + jb(k) is established, Equation (1) is expressed as follows:

[Equation 3]

$$\tag{2}$$

$$D(t) = R[D^*(t)]$$

$$= R\left[\sum_{k=0}^{N-1} d(k) \, e^{j\omega_k t}\right]$$

where * means a complex number, and R[] represents the real-number part of [].

Since the following equation is established:

$$\text{[Equation 4]} \quad D^*(t) = \sum_{k=0}^{N-1} d(k) e^{j\omega_k t}$$

$$= \sum_{k=0}^{N-1} [(a_k + jb_k) \cos \omega_k t + j(a_k + jb_k) \sin \omega_k t]$$

$$= \sum_{k=0}^{N-1} (a_k \cos \omega_k t - b_k \sin \omega_k t) + j(a_k \sin \omega_k t + b_k \cos \omega_k t)$$

$$= D(t) + jI(t) \tag{3},$$

it is apparent from Equation (3) that D(t) is expressed by Equation (2). In Equation (2), when t = m∆t is established,

$$\text{[Equation 5]}$$

$$D(m) = R\left[\sum_{k=0}^{N-1} d(k) e^{j\omega k \cdot m \cdot \Delta t}\right]$$

$$= R\left[\sum_{k=0}^{N-1} d(k) e^{j2\pi \frac{km}{N}}\right] \tag{4}$$

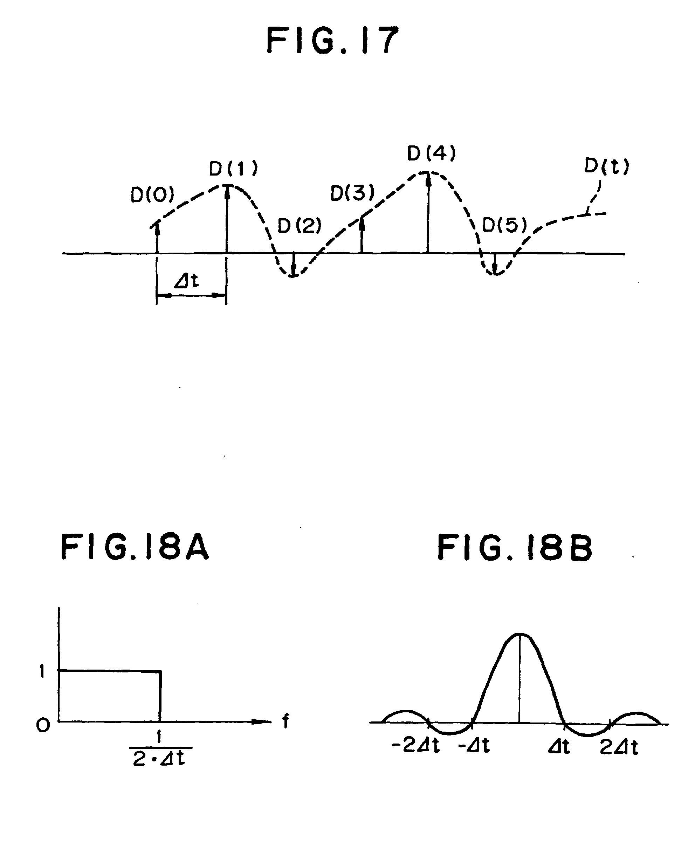

where it must receive attention that D(m) is the real-number part of IDFT (Inverse Discrete Fourier Transform) of d(k). When D(m) is output as D(0), D(1),..., D(N-1) for each ∆t, D(m) is expressed as shown in FIG. 17. This signal must be obtained by sampling Equation (2) for each ∆t. Therefore, when the signal passes through an ideal filter having the frequency characteristic shown in FIG. 18A and the impulse characteristic shown in FIG. 18B, the same equation as Equation (2) can be obtained.

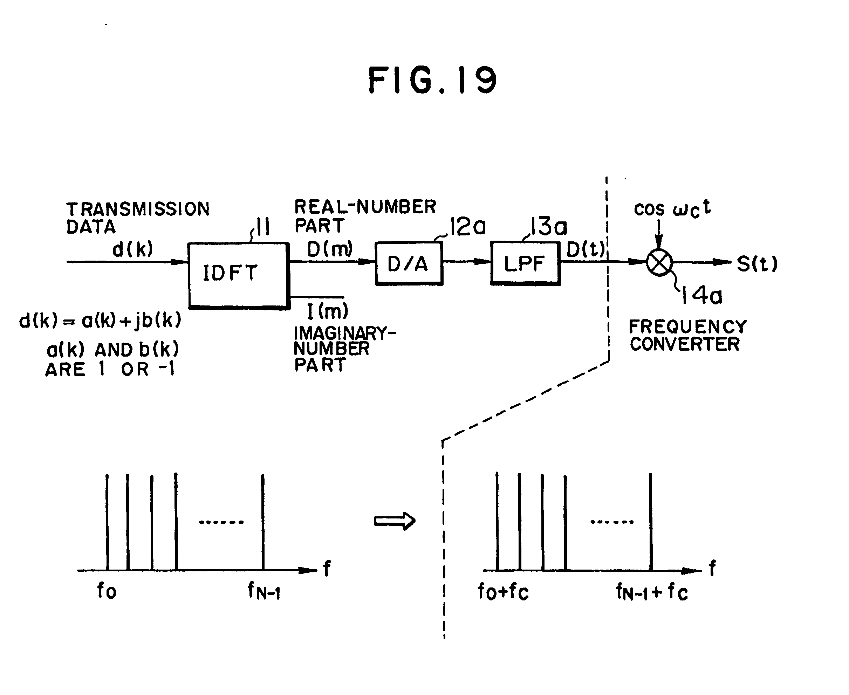

As is apparent from the above description, in the modulator, IDFT is performed to input data d(k) (complex), and the real-number parts D(0) to D(N-1) are output for each ∆t and are caused to pass through the ideal filter, thereby obtaining a modulation wave (baseband signal). FIG. 19 is a view showing the arrangement of a main part of a transmitter constituted while giving attention to this point. Reference numeral 11 denotes an IDFT section for performing inverse discrete Fourier transform to input data d(k) which is expressed as complex numbers by data a(k), b(k) (k = 0 to N) of N groups each having two bits; 12a, a DA converter for converting a real-number part output from the IDFT section into an analog signal; 13a, an ideal filter; 14a, a multiplying section for multiplying an ideal filter output D(t) by cosωt to perform frequency conversion.

(b-2) Arrangement of Demodulator

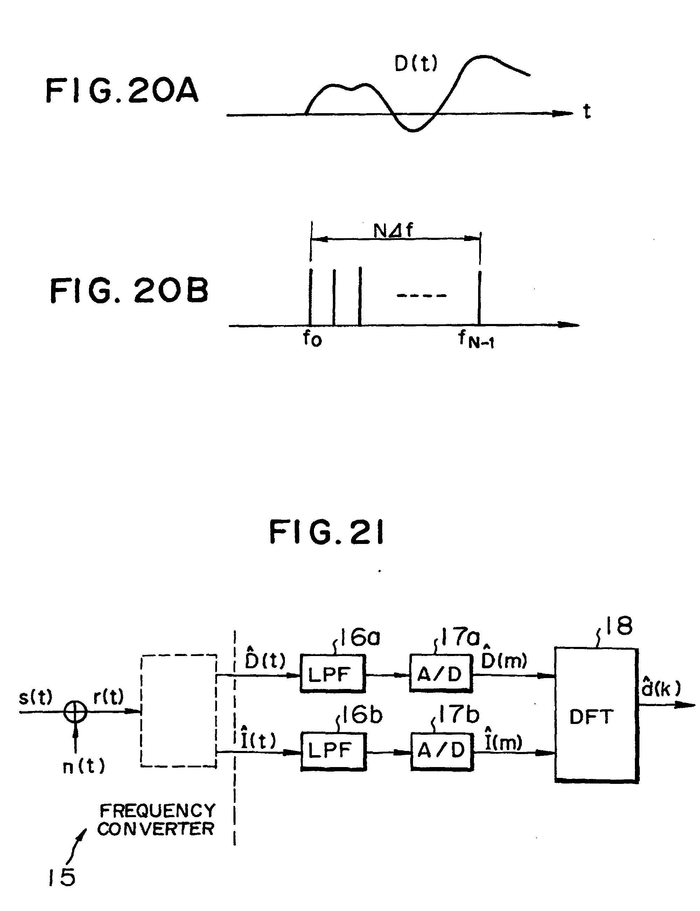

When only D(t) is obtained by received frequency conversion, original information cannot be extracted without sampling 2N points. This is because D(t) consists of the real-number part of IDFT at N points. This is apparent from a sampling theorem as shown in FIGS. 20A and 20B. According to the sampling theorem, a signal in a band N·∆f must be sampled at a frequency of 1/(2·N·∆f). Since the following equation is established:

$$1/(2·N·\Delta f) = \Delta t/2,$$

the signal must be sampled at an interval of ∆t/2 but an interval of ∆t. For this reason, sampling at 2N points must be performed in Ts zone (N·∆t).

However, when a real-number part D(t) and an imaginary-number part I(t) are obtained, an original signal can be extracted by sampling at N points as in the following description.

A complex baseband signal obtained after received frequency conversion is expressed in Equation (5).

[Equation 6]

$$Y^*(t) = \hat{D}(t) + j\hat{I}(t) \tag{5}$$

The right-hand real-number part and the right-hand imaginary-number part are obtained by deforming D(t) and I(t) by the transmission path and noise. When an ideal transmission path is used, the right-hand real-number part and the right-hand imaginary-number part are equal to D(t) and I(t), respectively.

$$[\text{Equation 7}] \quad r^*(t) = \sum_{k=0}^{N-1} (\hat{a}_k \cos 2\pi f_k t - \hat{b}_k \sin 2\pi f_k t) + j(\hat{a}_k \sin 2\pi f_k t + \hat{b}_k \cos 2\pi f_k t)$$

$$= \sum_{k=0}^{N-1} (\hat{a}_k + j\hat{b}_k) \cos 2\pi f_k t + j(\hat{a}_k + j\hat{b}_k) \sin 2\pi f_k t$$

$$= \sum_{k=0}^{N-1} \hat{d}(k) e^{j\omega t} \tag{6}$$

Assume that Equation (6) is sampled by $m\Delta t$ (m = 0, 1, 2,... N-1). In this case, when the following equation is established:

[Equation 8]

$$Y^*(m) = \sum_{k=0}^{N-1} \hat{d}(k) e^{j\omega_k m \Delta t}$$

$$= \sum_{k=0}^{N-1} \hat{d}(k) e^{j2\pi \frac{km}{N}}$$

$$y^*(m) = \frac{Y^*(m)}{N} \tag{7}$$

Equation (7) can be expressed by the following equation:

[Equation 9]

$$y^*(m) = \frac{1}{N} \sum_{k=0}^{N-1} \hat{d}(k) e^{j2\pi \frac{km}{N}} \tag{8}$$

Therefore, d(k) is obtained by Equation (8) as described follows.

[Equation 10]

$$\hat{d}(k) = \sum_{m=0}^{N-1} y^*(m) e^{-j2\pi \frac{km}{N}} \tag{9}$$

According to this equation, an estimation value of the original signal d(k) is obtained. As only a reference, the relational expression between DFT and IDFT is given by the following equation:

[Equation 11]

$$X_k = \sum_{n=0}^{N-1} x_n e^{-j2\pi\frac{kn}{N}}$$

$$x_n = \frac{1}{N}\sum_{k=0}^{N-1} X_k e^{j2\pi\frac{nk}{N}} \tag{10}$$

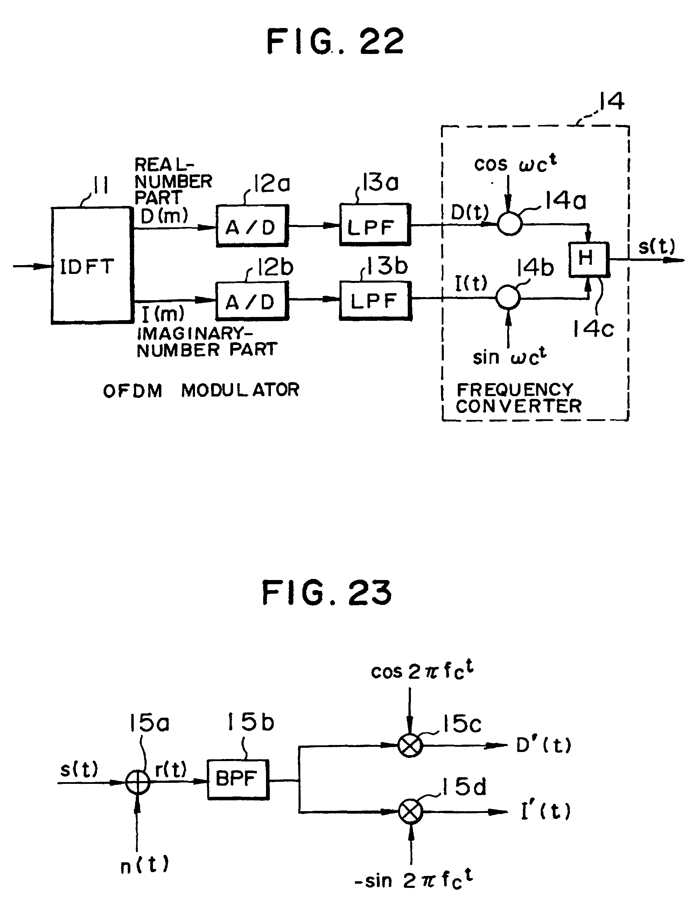

As described above, a complex baseband signal obtained by frequency-converting a received signal S(t) is converted into a digital signal through a low-pass filter. When the digital signal is subjected to DFT by the DFT section, the estimation value of the original signal d(k) is obtained. FIG. 21 is a view showing the arrangement of a main part of a receiver constituted while giving attention to this point. Reference numeral denotes a frequency converter; 16a and 16b, low-pass filters; 17a and 17b, A/D converters; and 18, a DFT section.

(c) Frequency Conversion on Transmission Side

An orthogonal balance modulation scheme using D(t) and I(t) is the same as a frequency conversion scheme used in an SSB scheme as shown in FIG. 22. Referring to FIG. 22, reference numeral 11 denotes an IDFT section; 12a and 12b, AD converters; 13a and 13, low-pass filters; and 14, a frequency converter. The frequency converter 14 is constituted by multiplying sections 14a and 14b for multiplying $\cos\omega_c t$ and $\sin\omega_c t$ and a hybrid circuit 14c for synthesizing outputs from the multiplying sections to output a synthesized signal.

An output signal S(t) from the frequency converter 14 is given by the following equation:

[Equation 12]

$$s(t)=D(t)\cos\omega_c t + I(t)\sin\omega_c t$$

$$=\sum_{k=0}^{N-1}(a_k\cos 2\pi f_k t - b_k\sin 2\pi f_k t)\cos 2\pi f_c t + \sum_{k=0}^{N-1}(a_k\sin 2\pi f_k t + b_k\cos 2\pi f_k t)\times(-\sin 2\pi f_c t)$$

$$=\sum_{k=0}^{N-1}(a_k\cos 2\pi (f_k + f_c)t - b_k\sin 2\pi (f_k + f_c)t)$$

$$\tag{11}$$

The signal S(t) does not include a lower sideband. Therefore, in this scheme, a band which is 1/2 the band in a both-sideband scheme can be obtained, and transmission efficiency is improved.

(d) Frequency Conversion Scheme on Reception Side

FIG. 23 is a view showing the arrangement of an orthogonal frequency converter using $\cos\omega_c t$ and $\sin\omega_c t$. Reference numeral 15a denotes an adder (not actually exist) for adding a noise signal n(t) expressed by the following equation:

$$n(t) = n_c t(k)\cos 2\pi(f_c + f_k)t - n_s(k)\sin 2\pi(f_c + f_k)t$$

to a received signal s(t) (see Equation (11)) to output a signal r(t); 15b, a bandpass filter; and 15c and 15d, multiplying sections for multiplying a bandpass filter output by $\cos\omega_c t$ and $-\sin\omega_c t$. In an ideal transmission path which is free from amplitude attenuation, noise, and phase delay, r(t) = s(t) is established. The following description is on the assumption that r(t) = s(t) is established. Output signals D'(t) and I'(t) from the orthogonal frequency converter are expressed by the following equations, respectively:

**[Equation 13]**

$$D'(t) = \sum_{k=0}^{N-1} [a_k \cos 2\pi (f_c + f_k)t - b_k \sin 2\pi (f_c + f_k)t] \cos 2\pi f_c t$$

$$= \frac{1}{2} \sum_{k=0}^{N-1} [a_k \cos 2\pi f_k t - b_k \sin 2\pi f_k t]$$

$$= \frac{1}{2} D(t) \tag{12}$$

$$I'(t) = \sum_{k=0}^{N-1} [a_k \cos 2\pi (f_c + f_k)t - b_k \sin 2\pi (f_c + f_k)t] \times (-\sin 2\pi f_c t)$$

$$= \frac{1}{2} \sum_{k=0}^{N-1} [a_k \sin 2\pi f_k t + b_k \cos 2\pi f_k t]$$

$$= \frac{1}{2} I(t) \tag{13}$$

Note that, in Equations (12) and (13), the term of $2f_c$ is neglected. Equations (12) and (13) coincide with the real-number and imaginary-number parts of Equation (3) representing a complex baseband signal on the transmission side, respectively. Therefore, as has been described above, an original signal can be extracted by performing an N-point sampling DFT arithmetic operation.

(e) Differential Encoding

Although the frequency conversion scheme on reception side has been described in (d), it is very difficult to form a reception local frequency synchronized with a transmission local frequency $\omega_c$ in the OFDM scheme. When the reception local frequency includes a frequency error (asynchronous state), a demodulated vector is rotated as a result, and demodulation cannot be easily performed by the absolute phase. For this reason, information is not represented by the absolute phase, and the information is represented by the magnitude of phase rotation. This is called differential encoding. According to this scheme, even if there is some frequency error, demodulation can be performed.

(e-1) Differential Encoder

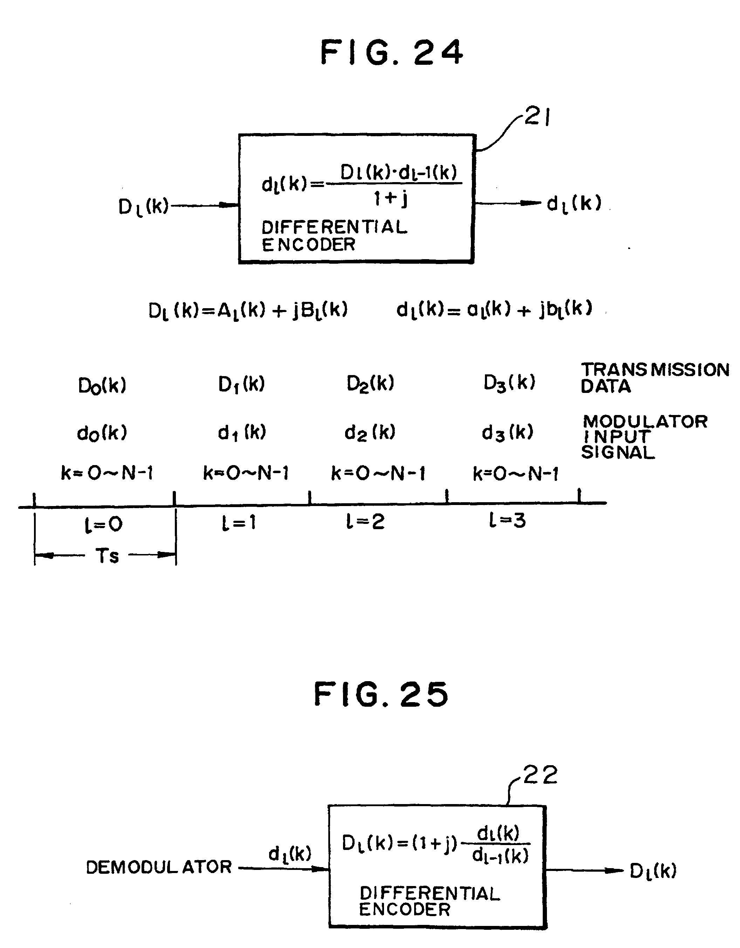

FIG. 24 is a view for explaining a differential encoder on transmission side. The logical equation of a differential encoder 21 is given by:

[Equation 14]

$$d_l(k) = \frac{D_l(k) \cdot d_{l-1}(k)}{1 + j} \tag{14}$$

The differential encoder 21 is to convert data $D_L(k)$ which is complex-expressed by the following equations:

[Equation 15]

$$D_l(k) = A_l(k) + jB_l(k) \qquad d_l(k) = a_l(k) + jb_l(k)$$

into $d_L(k)$ by the above logical equation.
A differential code,
in case of (1) $[A_L(k), B_L(k)] = (1,1)$,

is given by the following equation:

[Equation 16]

$$D_l(k) = A_l(k) + jB_l(k)$$

$$= 1 + j$$

When this value is put into Equation (14), the following equation can be obtained:

[Equation 17]

$$d_l(k) = \frac{(1 + j) \cdot d_{l-1}(k)}{1 + j}$$

$$= d_{l-1}(k)$$

the phase does not change.

In case of (2) $(A_L(k), B_L(k)) = (-1, -1)$, the following equation can be obtained:

[Equation 18]

$$D_l(k) = -1 - j$$

$$d_l(k) = \frac{-(1 + j) \cdot d_{l-1}(k)}{1 + j}$$

$$= -d_{l-1}(k)$$

the phase is inverted, i.e., the phase shifts by $\pi$.

In case of (3) $[A_L(k), B_L(k)] = (1, -1)$, the following equation is established:

[Equation 19]

$$D_l(k) = 1 - j$$

$$d_l(k) = \frac{(1 - j) \cdot d_{l-1}(k)}{1 + j}$$

$$= -j \cdot d_{l-1}(k)$$

$$= e^{-j\frac{\pi}{2}} \cdot d_{l-1}(k)$$

the phase shifts clockwise by $\pi/2$.

In case of (4) $[A_L(k), B_L(k)] = (-1, 1)$, the following equation is established:

[Equation 20]

$$D_l(k) = 1 - j$$

$$d_l(k) = \frac{(-1 + j) \cdot d_{l-1}(k)}{1 + j}$$

$$= j \cdot d_{l-1}(k)$$

$$= e^{j\frac{\pi}{2}} \cdot d_{l-1}(k)$$

the phase shifts counterclockwise by $\pi/2$.

(e-2) Differential Decoder

On the basis of Equation (14), the following equation is obtained:

[Equation 21]

$$D_l(k) = (1+j)\frac{d_l(k)}{d_{l-1}(k)} \tag{15}$$

A differential decoder 22 is to convert data $d_L(k)$ into $D_L(k)$ according to the logical equation represented by Equation (15) as shown in FIG. 25. Therefore, in accordance with the cases (1) to (4) of the differential decoder, the following differential decoding results (1) to (4) are output.

**[Equation 22]**

(1)

In case of $\quad \dfrac{d_l(k)}{d_{l-1}(k)} = 1$

$$D_l(k) = 1 + j \qquad\qquad [A_l(k), B_l(k)] = (1, 1)$$

(2)

In case of $\quad \dfrac{d_l(k)}{d_{l-1}(k)} = -1$

$$D_l(k) = -1 - j \qquad\qquad [A_l(k), B_l(k)] = (-1, -1)$$

(3)

In case of

$$\dfrac{d_l(k)}{d_{l-1}(k)} = e^{j\frac{\pi}{2}}$$

$$D_l(k) = j(1+j)$$
$$= -1 + j \qquad\qquad [A_l(k), B_l(k)] = (-1, 1)$$

**( 4 )**

In case of $\dfrac{d_I(k)}{d_{I-1}(k)} = e^{-j\frac{\pi}{2}}$

$D_I(k) = -j(1 + j)$

$\qquad = 1 - j$

$\{A_I(k),\ B_I(k)\} = (\ 1,\ -1)$

(f) Blocks of Transmission System and Reception System

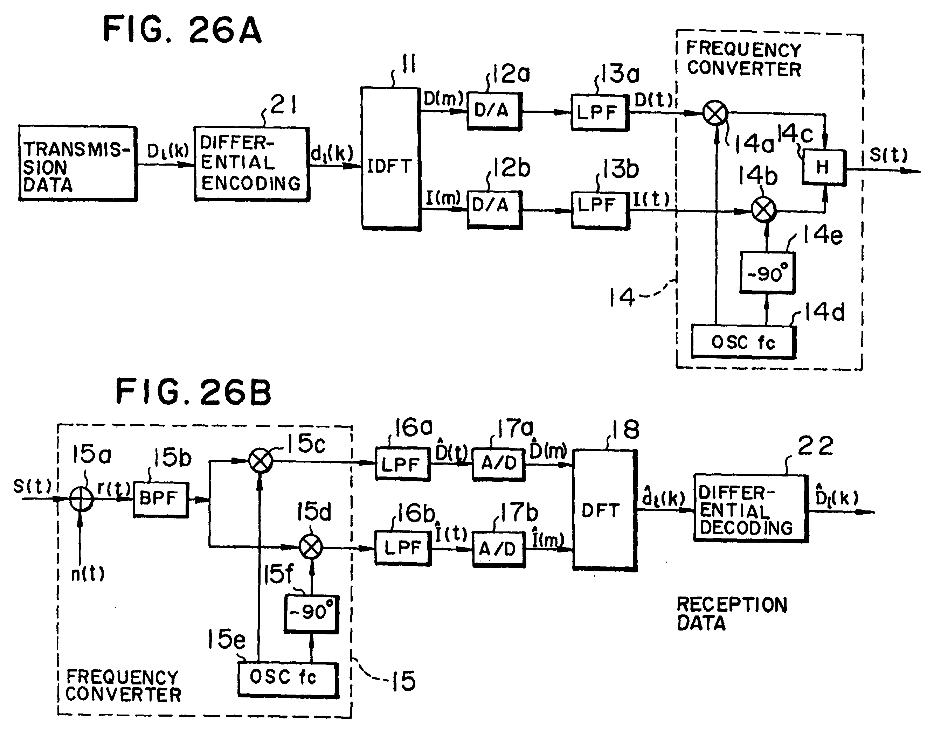

According to the above description, a transmission system and a reception system in digital audio broadcast using the OFDM scheme have arrangements shown in FIGS. 26A and 26B, respectively. In a frequency converter 14 in the transmission system, reference numeral 14d denotes an oscillator for outputting a cos signal ($\cos\omega_c t$) of a frequency $f_c$, and reference numeral 14e denotes a phase shifter for shifting the phase of the cos signal by -90° to output $-\sin\omega_c t$. In a frequency converter 15 in the reception system, reference numeral 15e denotes an oscillator for outputting a cos signal ($\cos\omega_c t$) of the frequency $f_c$, and reference numeral 15f is a phase shifter for shifting the phase of the cos signal by -90° to output $-\sin\omega_c t$. A cos wave and a sin wave (carrier) in the transmission system are called transmission local signals, and a cos wave and a sin wave in the reception system are called reception local signals.

On the transmission side, a DAB frame is constituted by a known phase reference symbol and M data symbols. Each symbol is divided into N groups each having two bits, the first and second data of each group are encoded as a real-number part and an imaginary-number part, respectively. The real-number part and imaginary-number part of a differential code are sequentially input to a Fourier transformer 11, the real-number part and the imaginary-number part output from the Fourier transformer are converted into analog signals, and the analog signals are multiplied by the cos and sin waves of the transmission local frequency fc, respectively. The multiplication results are synthesized to be radiated in the space.

On the transmission side, the signal radiated in the space is received, and the received signal is multiplied by cos and sin waves of a reception local frequency. The multiplication results are converted into digital signals, and the digital signals are input to a Fourier transformer 18. A real-number part and an imaginary-number part output from the Fourier transformer are differentially decoded, and the decoded signals are sequentially output as first and second data serving as original data. The Fourier transformer 18 executes a Fourier transformation process on the basis of the generation timing of a DFT window signal. More specifically, a window signal generator (not shown) detects a null signal portion formed between frames to output a DFT window signal serving as a Fourier transformation execution timing of each symbol. The Fourier transformer 18 executes Fourier transformation on the basis of the generation timing of the DFT window signal.

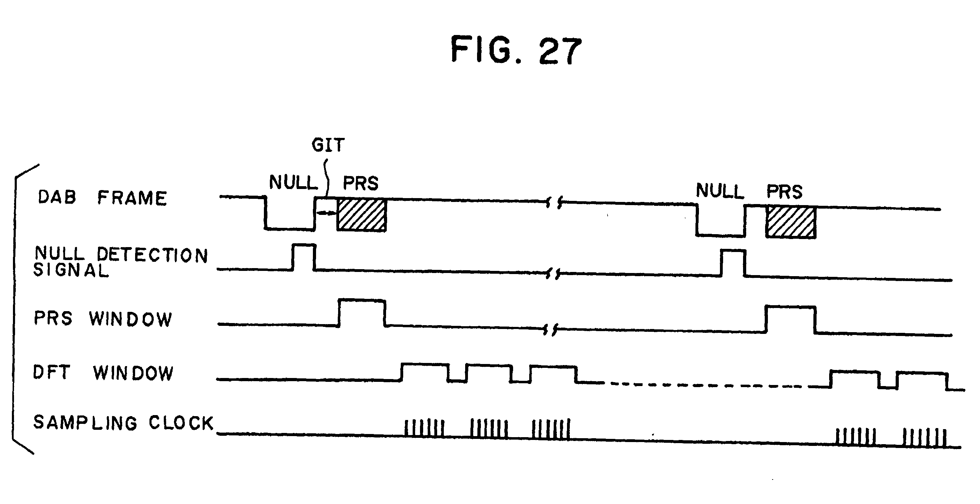

FIG. 27 is a timing chart for explaining a DAB frame and window signals. The start portion of the DAB frame is called a synchronous channel, and is constituted by a null signal portion NULL and a phase reference symbol PRS (Phase Reference Symbol). A guard interval GIT of 62 $\mu$s (in case of mode 2) is formed before the phase reference symbol portion PRS to reduce the influence of a multipath. A predetermined number (= m) of symbols are arranged after the synchronous channel, and a guard interval of 62 $\mu$s is formed before each symbol to reduce the influence of a multipath as in the above description. The contents of the second-half portion of a corresponding symbol are repeatedly inserted into the respective guard intervals.

The null signal portion NULL is formed to find the start of a frame. The phase reference symbol PRS is used as a reference signal for differential decoding or is used for an impulse response arithmetic operation of a transmission path. The phase reference symbol PRS receives a unique pattern (known) inherent in each frame. The PRS window is a window arranged at a predetermined time position with reference to the detected null signal portion NULL. The DFT window indicates the timing of a DFT arithmetic operation of each symbol.

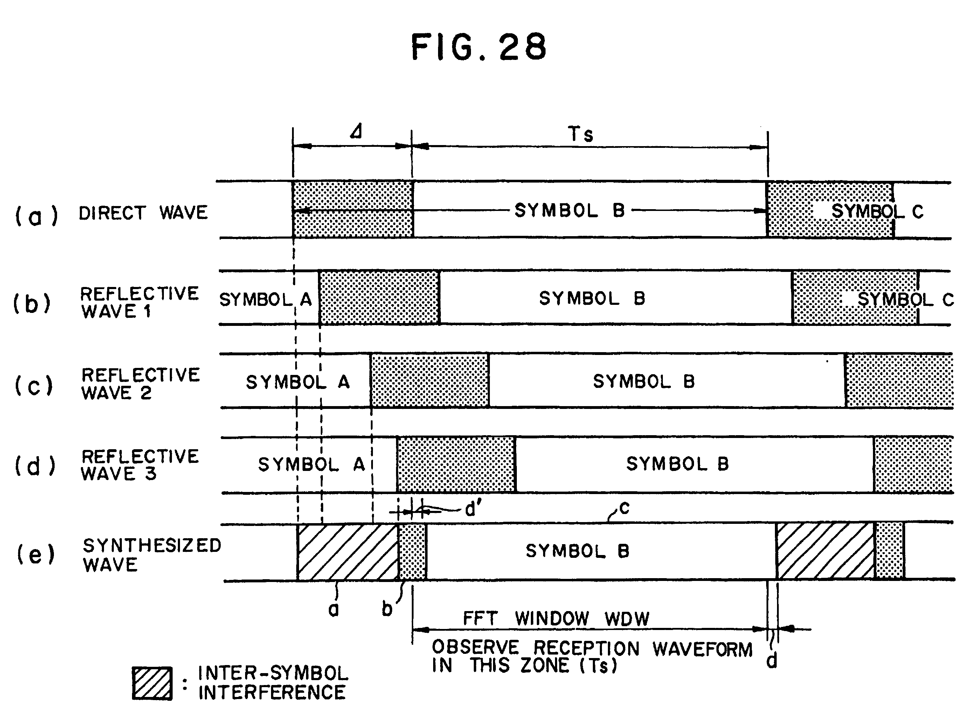

When a multipath is generated, as shown in FIGS. 28A to 28D, in addition to a direct wave, a plurality of reflective waves are generated. More specifically, the symbol position of the direct wave is as shown in FIG. 28A, and the symbol positions of the reflective waves 1 to 3 generated by a multipath are as shown in FIGS. 28B to 28D because of delay. As a result, a synthesized wave between the direct wave and the reflective waves becomes the wave shown in FIG. 28E. Reference symbol $\Delta$ denotes a guard interval. The same contents as those of the second-half portion of the symbol B are repeatedly inserted into the guard interval $\Delta$.

In the synthesized wave, zone a indicates a guard interval zone which is interfered from adjacent symbol A due to a multipath; zone b, a guard interval zone which is not interfered from symbol A; and zone c, the zone of symbol B. A DFT window WDW must be set at a position where an interest symbol is DFT-demodulated without being influenced by an adjacent symbol. For example, the DFT window WDW is set at a position shown in FIG. 28E. In this case, when the DFT window is out of the zone of symbol B, the contents of a portion d which is out of the zone can be loaded from a guard interval portion d'. For this reason, the Fourier transformer can correctly DFT-demodulate symbols.

In this manner, even if a reflective wave is generated by a multipath, when delay from the direct wave is set within the guard interval period, an interest symbol is not interfered from an adjacent symbol such that the DFT window position is set as described above. However, when a reflective wave having delay from the direct wave exceeding the guard interval period is generated, the reflective wave interferes with the adjacent symbol. When the interference of the adjacent symbol occurs, the DFT window must be set at a position where the interference is minimized. However, there is no art in which the above measure is arranged. Therefore, the interference causes the degradation of tone quality and serves as a factor that generates multipath noise.

As described above, even if a reflective wave is generated by a multipath, when delay from the direct wave is set within the guard interval period, the symbol is not interfered from an adjacent symbol such that the DFT window position is properly set. However, when the receiver is on a vehicle, a multipath environment changes every moment. For this reason, the DFT window must be set at a position where interference of the DFT window caused by a symbol with respect to the next multipath environment change is made as small as possible. However, there is no art in which the above measure is arranged. Therefore, the interference causes the degradation of tone quality and serves as a factor that generates multipath noise.

WO-A-96/19 056 discloses a digital broadcast receiver, specifically an OFDM-Receiver of the type discussed herein above. Means for correcting frequency, time window error, sampling clock and phase error are provided. A main focus of the weighted impulse response is calculated and the position of the main focus is used for correcting the time window.

US-A-5,471,464 discloses a digital broadcast receiver in which the received signal is demodulated by DFT. The time window generated by a DFT window generator is synchronized with a synchronization symbol. A basic time window signal is obtained by dividing a reproducing clock. The results of DFT are used for synchronization in order to obtain a stable time window signal.

SUMMARY OF THE INVENTION

It is the object of the present invention to set a DFT window at a position where the DFT window is not easily interfered by a symbol with respect to the next multipath environment change even if a multipath environment changes every moment.

According to the present invention, the above object is achieved by a digital audio broadcast receiver defined in claim 1.

Preferred embodiments are defined by the dependent claims.

BRIEF DESCRIPTION OF THE DRAWINGS

FIG. 1 is a model of a transmission path.
FIG. 2 is a view for explaining impulse response.
FIG. 3 is a view for explaining a signal in a phase reference symbol.
FIG. 4 is a graph showing impulse response.
FIG. 5 is a graph for explaining impulse response depending on the presence/absence of delay.
FIG. 6 is a view for explaining the relationship between impulse response and a guard interval in a state wherein a multipath is generated.
FIG. 7 is a view for explaining the first principle of the present invention.
FIG. 8 is a view for explaining the second principle of the present invention (part 1).
FIG. 9 is a view for explaining the second principle of the present invention (part 2).
FIG. 10 is a view showing the arrangement of a DAB receiver according to the present invention.
FIG. 11 is a flow chart showing a process of determining a DFT window position.
FIG. 12 is a flow chart showing another process of determining a DFT window position.
FIG. 13 is a view showing the theoretical arrangement of a transmitter in digital audio broadcast.
FIG. 14 is a view for explaining the function of a frequency multiplexer.
FIG. 15 is a view for explaining a symbol.
FIG. 16 is a view showing the theoretical arrangement of a receiver in digital audio broadcast.
FIG. 17 is a view for explaining D(m).
FIG. 18 is the characteristics of an ideal filter.

FIG. 19 is a view showing the arrangement of a main part of a transmitter using IDFT.

FIG. 20 is a view for explaining a sampling theorem.

FIG. 21 is the arrangement of a main part of a receiver using DFT.

FIG. 22 is the arrangement of an orthogonal balance modulation scheme.

FIG. 23 is the arrangement of an orthogonal frequency conversion scheme.

FIG. 24 is a view for explaining a differential encoder.

FIG. 25 is a view for explaining a differential decoder.

FIG. 26 is the arrangements of a transmission system and a reception system.

FIG. 27 is a view for explaining a DAB frame.

FIG. 28 is a view for explaining FFT window position control in a multipath environment.

## DESCRIPTION OF THE PREFERRED EMBODIMENTS

(a) Impulse Response of Transmission Path

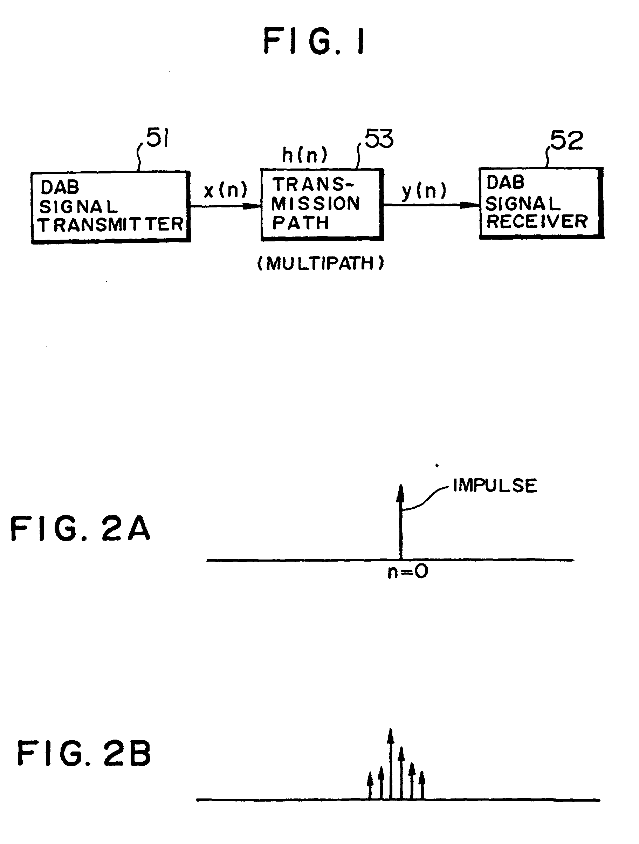

FIG. 1 is a model of a transmission path. Reference numeral 51 denotes a DAB transmitter; 52, a DAB receiver; and 53, a transmission path. Reference symbol x(n) denotes a transmission signal; h(n), the characteristic of the transmission path; and y(n), a reception signal. The respective signals have the following relationship:

$$X(k) \cdot H(k) = Y(k)$$

i.e.,

$$H(k) = Y(k)/X(k) \tag{16}$$

where $X(k)$, $H(k)$, and $Y(k)$ are obtained by performing Fourier transformation to $x(n)$, $h(n)$, and $y(n)$, respectively.

Due to the above relationship, when $x(n)$ and $y(n)$ or $X(k)$ and $Y(k)$ are known, $h(n)$ (impulse response) is derived, and a multipath environment can be estimated by the impulse response. FIG. 2A shows impulse response obtained when no multipath is generated, and FIG. 2B shows impulse response obtained when a multipath is generated. More specifically, a reference phase symbol (PRS) included in the start of the frame shown in FIG. 27 is represented by $X(k)$, and the received PRS is represented by $Y(k)$, thereby deriving $h(n)$.

In DAB, as $X(k)$, a signal expressed by the following equation is used:

$$X(k) = e^{j\pi^{k/4}} \ (-m \leq k \leq -1, 1 \leq k \leq m)$$

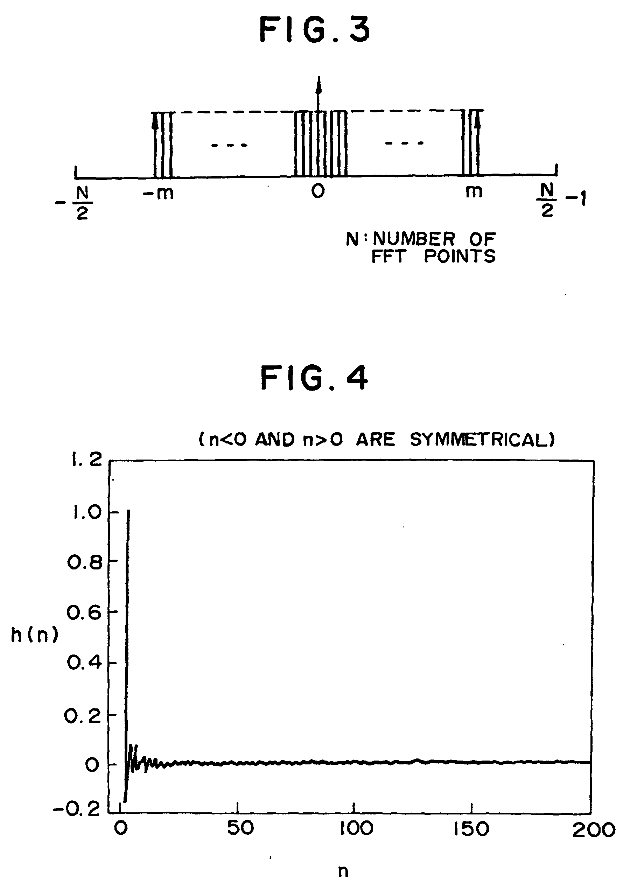

0 (m does not satisfy the above conditions) This signal is illustrated in FIG. 3 (carrier exists in the range represented by $-m \leq k \leq -1$ and $1 \leq k \leq m$). Therefore, the transmission path has no delay time, $H(k)$ is given by the following equation:

$$H(k) = Y(k)/X(k) = 1 \ (-m \leq k \leq -1, 1 \leq k \leq m)$$

0 (m does not satisfy the above conditions)

In the above equation, assume that $H(1) = 1$ is approximately established. In this case, it is apparent that inverse DFT of $H(k)$ is given by the following sinc function.

$$h(n) = (m/N) \cdot [\sin(n\pi m/N)/(n\pi m/N)] \tag{17}$$

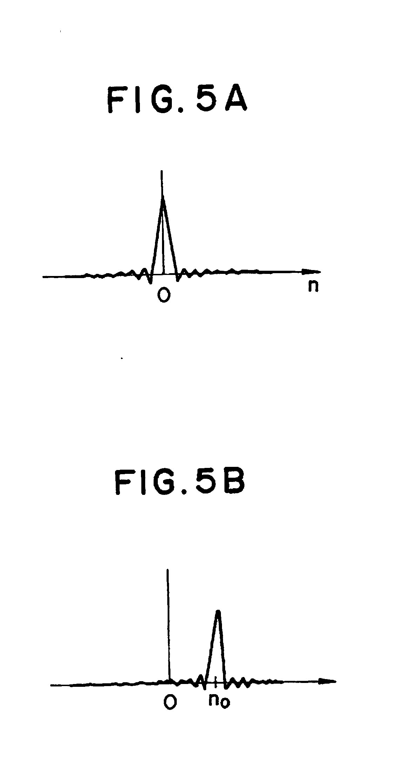

More specifically, since $m = 1536$ and $N = 2048$ are satisfied in mode I of the DAB, the $h(n)$ is given by $h(0) = 1$ where $n = 0$, and the $h(n)$ satisfies $h(n) << 1$ where $n \neq 0$. As shown in FIG. 4, a sharp peak appears at a position where $h(n)$ is maximum, i.e., $n \ (= 0)$. Therefore, when the transmission path has no delay time, an impulse response shown in FIG. 5A is obtained. However, when the transmission path has a delay time corresponding to $n_0$ sampling, the impulse response is expressed by $h(n - n_0)$. For this reason, when n is substituted for $n - n_0$ in Equation (17), the impulse response changes into that shown in FIG. 5B, and an impulse appears at a position which shifts by $n_0$. More specifically,

when a delayed reflective wave is generated by a multipath, a plurality of impulses are generated as shown in FIG. 2B.

(b) Principle of First Invention

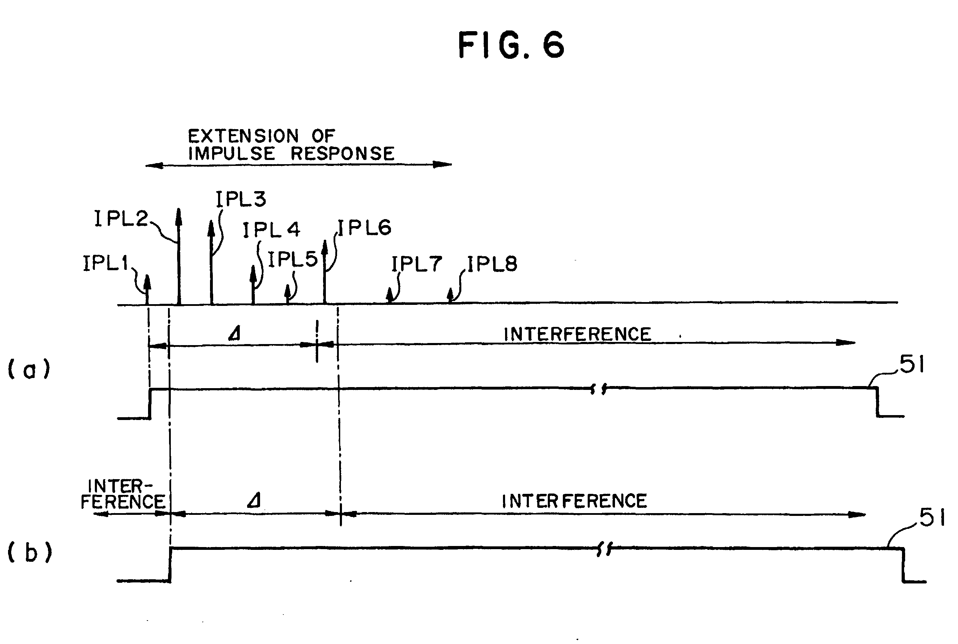

When a reflective wave is generated by a multipath, and the impulse response of the transmission path has an extension equal to or larger than the width $\Delta$ of the guard interval, a window is interfered from an adjacent symbol. In the case shown in FIG. 6A, impulses IPL6 to IPL8 which exceed the range of the width $\Delta$ of the guard interval become interference signals. More specifically, when the DFT window 51 is set at the position shown in FIG. 6A, the impulses IPL6 to IPL8 serve as interference signals, and the other impulses serve as signals which contribute to the DFT process of an interest symbol.

Similarly, when the DFT window 51 is set at the position shown in FIG. 6B, the impulses IPL1 and IPL7 to IPL8 serve as interference signals, and the other impulses IPL2 to IPL6 serve as signals which contribute to the DFT process of the interest symbol.

When the DFT window is set at a position where the energy of the interference signals is minimum and the energy of the other signals is maximum, adjacent symbol interference from a multipath can be minimized.

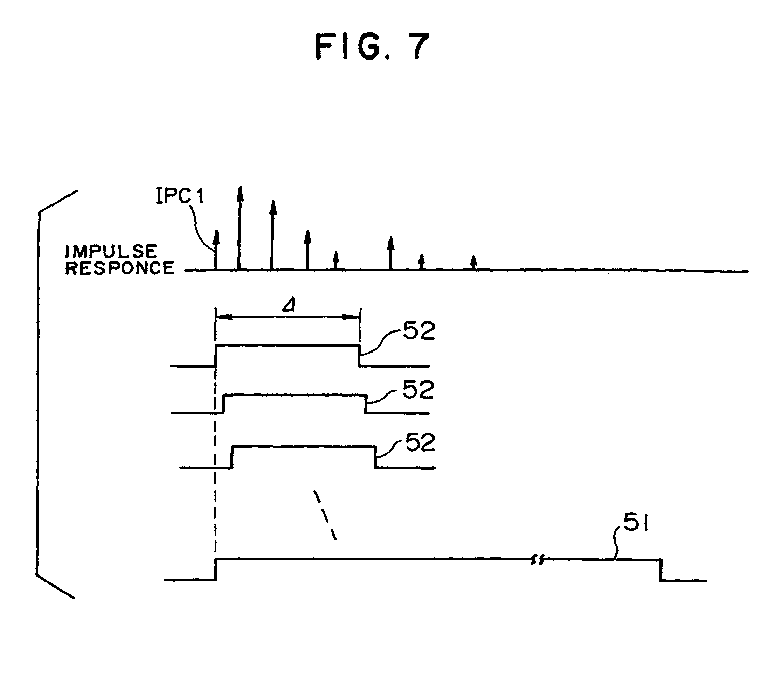

For this reason, as shown in FIG. 7, the window 52 having a width equal to the width $\Delta$ of the guard interval is assumed. The position of the window 52 is sequentially shifted, and energy (total sum of amplitudes of impulses) of impulses set in the width $\Delta$ of the window 52 is calculated at respective positions to obtain a position where the energy is maximum. When the DFT window 51 is set at the position where the energy is maximum, the influence of interference can be minimized.

(c) Principle of Second Invention

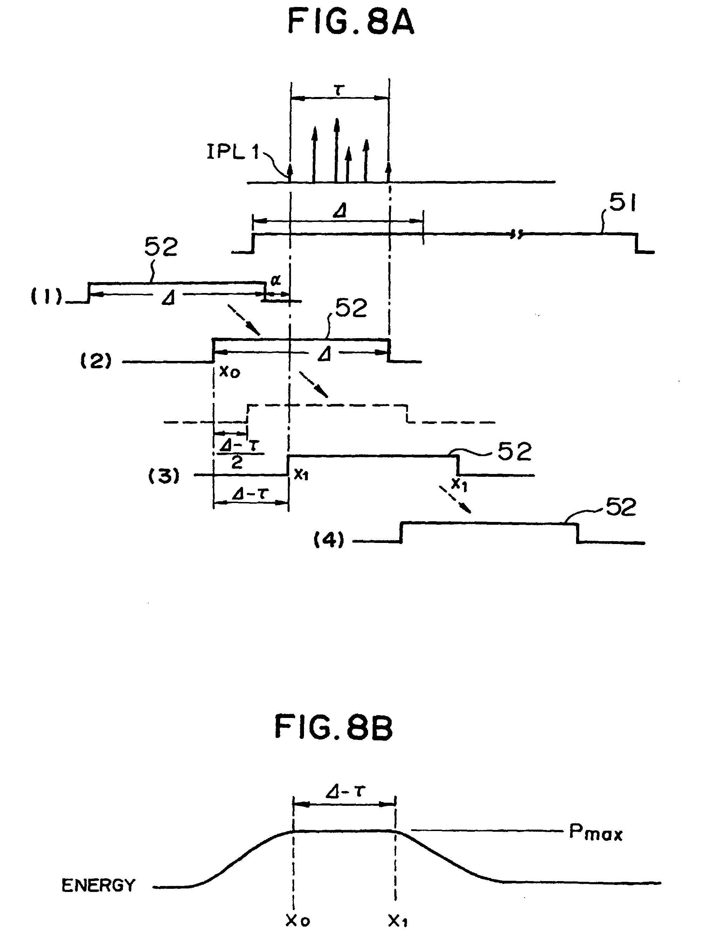

Even if a reflective wave is generated, as shown in FIG. 8, an extension $\tau$ of impulse response of the transmission path is smaller than the width $\Delta$ of the guard interval. In this case, the position of the DFT window is set such that the impulse is within the start width $\Delta$ of the DFT window 51, the DFT window is not interfered from the adjacent symbol. However, when the receiver is on a vehicle, a multipath environment changes every moment. For this reason, the DFT window must be set at a position where interference of the DFT window caused by a symbol with respect to a multipath environment change is made as small as possible. For this purpose, the extension range $\tau$ of the impulse is preferably set at a central position in the start width $\Delta$ of the DFT window 51.

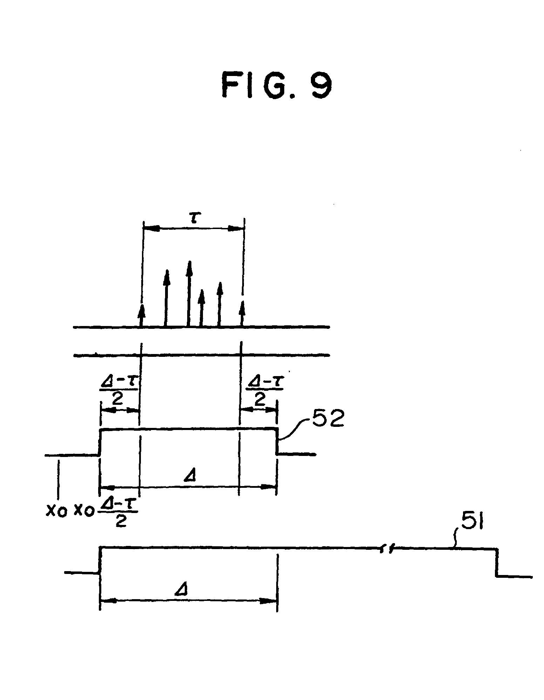

Assume a window 52 having a width equal to the guard interval width $\Delta$, and the position of the window 52 is sequentially shifted, and the energy (total sum of amplitudes of impulses) of impulses set in the width $\Delta$ of the window 52 is calculated at respective positions to obtain a position $x_0$ (position indicated by (2) in FIG. 8) where the energy is maximum. When the DFT window 51 is set at the position where the energy is maximum, the influence of interference can be minimized. When window positions each indicating a maximum energy Pmax continue (zone between (2) and (3)), and the width ($\Delta - \tau$) of the continuous zone is calculated. Thereafter, the position (see the dotted line in FIG. 8) of the window 52 is set such that the extension range of impulses is located at the center of the window 52 by using the window position $x_0$ and the width ($\Delta - \tau$). More specifically, as shown in FIG. 9, the position being apart from the position $x_0$ at a distance of ($\Delta - \tau$)/2 is set as the start edge position of the window 52, and the DFT window 51 is set at the same position as the start edge position. In this manner, margins for the advance/delay of the impulse can be set to be ($\Delta - \tau$)/2, and the DFT window 51 can sufficiently cope with the next multipath environment change. Therefore, symbol interference with the DFT window 51 can be suppressed.

(d) Embodiment of the Present Invention

(d-1) Arrangement of DAB Receiver

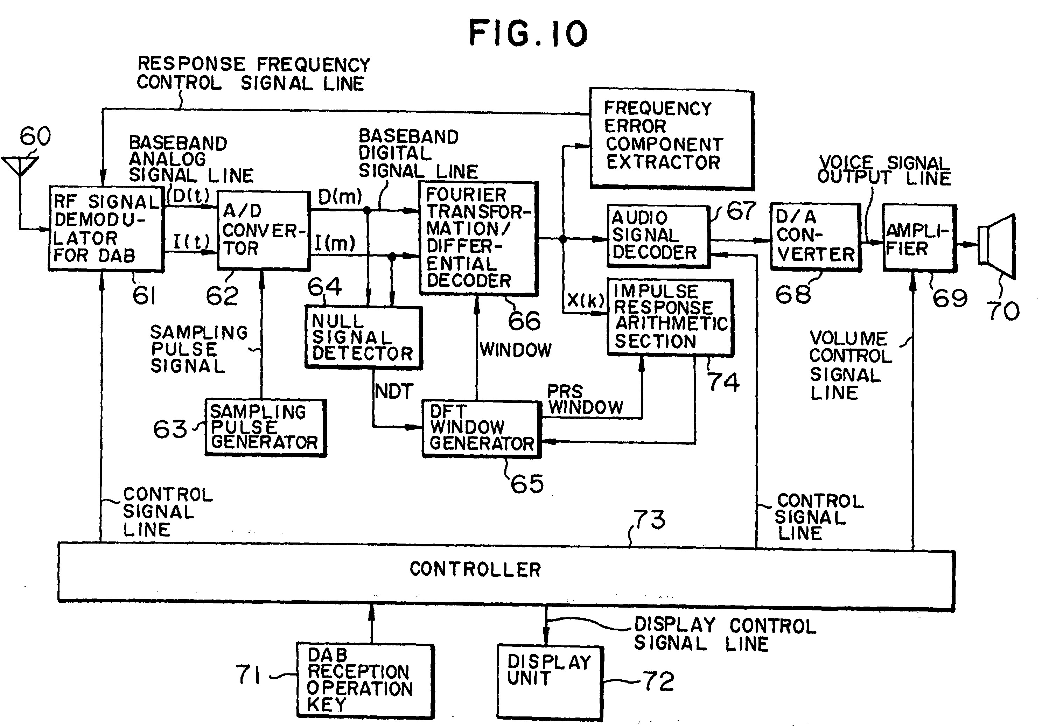

FIG. 10 is a view showing the arrangement of a DAB receiver according to the present invention.

Reference numeral 60 denotes a reception antenna; 61, an RF signal demodulator for DAB which multiplies a received signal by cos and sin waves of a carrier frequency to output baseband analog signals D(t) and I(t); 62, an AD converter for converting the baseband analog signals D(t) and I(t) into digital data D(m) and I(m) at a predetermined sampling frequency; 63, a sampling pulse generator for outputting a sampling pulse; 64, a null signal detector for detecting a null signal portion between DAB frames to output a null detection signal NDL; and 65, a DFT window generator for outputting DFT window signals (including a PRS window signal) serving as Fourier transformation execution timings of symbols constituting a DAB frame. The DFT window generator 65 determines a DFT window position according to the process (to be described later) to output a DFT window signal.

Reference numeral 66 denotes a Fourier transformation/differential decoder for performing a Fourier transformation process to the digital data D(m) and I(m) in the PRS window and the DFT window and differentially decoding the digital data D(m) and I(m) to demodulate X(k) (see Equation (16)) and audio code data (e.g., MPEG audio data); 67, an audio signal decoder for decoding the MPEG audio data into a PCM audio data; 68, a DA converter for converting the PCM audio data into analog data; 69, an amplifier; 70, a loudspeaker; 71, an operation key unit; 72, a display unit; and 73, a controller for performing tuning control or other control. Reference numeral 74 denotes an impulse response arithmetic section for arithmetically operating an impulse response by using the Fourier transformation output X(k) in the PRS window period on the basis of Equation (16).

(d-2) Process of Determining DFT Window Position

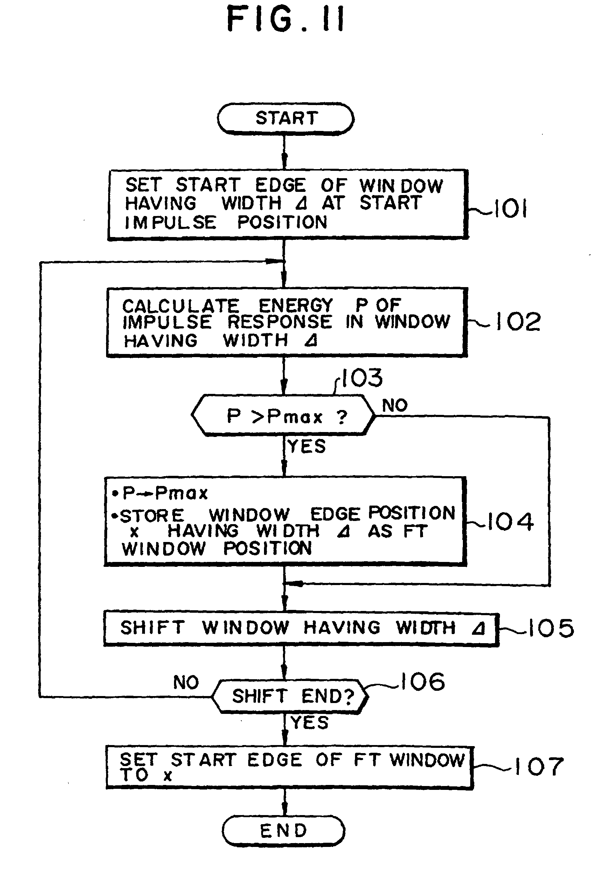

FIG. 11 is a flow chart showing a process of determining a DFT window position.

When the DFT window generator 65 receives an impulse response result from the impulse response arithmetic section 74, the start edge of the window 52 (see FIG. 7) having a guard interval width $\Delta$ is set at a position slightly before the position of impulse IPL1 (step 101). At this position, the total sum (energy of impulse response) P of amplitudes of all impulses set in the width of the window 52 is calculated (step 102) to check whether the energy P is the maximum energy Pmax (initial value of Pmax is 0) or more (step 103). If P > Pmax is established, P → Pmax is set, the start edge position x of the window 52 is stored as a DFT window position (step 104), and the position of the window 52 is shifted to the right by one step (step 105). On the other hand, if P ≤ Pmax is established in step 103, the position of the window 52 is shifted to the right by one step without updating Pmax (step 105).

It is checked whether a shift amount becomes a set value (e.g., $\Delta$) (step 106). If NO in step 106, the steps following step 102 are repeated to search for the window position having the maximum energy.

When the window position x having the maximum energy is obtained as described above, the DFT window position is determined such that the start edge of the DFT window is located at the window position x, and a DFT window signal is generated (step 107).

(d-3) Entire Operation

The RF signal demodulator 61 for DAB multiplies a received signal by cos and sin waves of the carrier frequency to output baseband analog signals D(t) and I(t), and the AD converter 62 converts baseband analog signals D(t) and I(t) into digital data D(m) and I(m) on the basis of a sampling pulse output from the sampling pulse generator 63 to input the digital data D(m) and I(m) to the null signal detector 64 and the Fourier transformation/differential decoder 66. While the above operation is performed, the DFT window generator 65 inputs a DFT window signal and a PRS window signal to the Fourier transformation/differential decoder 66 and the impulse response arithmetic section 74 at a timing calculated in the previous frame according to the process in FIG. 11.

When the Fourier transformation/differential decoder 66 performs a Fourier transformation process to the digital data D(m) and I(m) in the PRS window and the DFT window for each symbol, and then differentially decodes the digital data D(m) and I(m) to demodulate X(k) and audio code data (MPEG audio data) and to output them.

The audio signal decoder 67 decodes the MPEG audio data into PCM audio data, and the DA converter 68 converts the PCM audio data into analog data and inputs the analog data to the loudspeaker 70 through the amplifier 69, thereby outputting DAB voice. The impulse response arithmetic section 74 arithmetically operates an impulse response by using the Fourier transformation output in the PRS window period on the basis of Equation (16) and inputs the arithmetic result to the DFT window generator 65.

The null signal detector 64 detects a null signal portion between DAB frames to output a null detection signal NDT. After the DFT window generator 65 receives the null detection signal NDT, when the DFT window generator 65 receives an impulse response from the impulse response arithmetic section 81, the DFT window generator 65 determines a DFT window position in the next frame according to the process in FIG. 11.

Subsequently, when the above operation is repeated, interference can be minimized even in a multipath generation environment, and preferable audio voice can be output from the loudspeaker.

(d-4) Modification

As a method of determining the position of the window 52 having the width $\Delta$, not only the above method, but also the following method can be used. More specifically, while the position of the window 52 largely shifts step a (1 < a < $\Delta$) by step a, the energies in the window at positions are calculated and compared with each other. In this manner, when the position having the maximum energy can be obtained, while the position shifts step by step, energy amounts in the ranges each having the width a and set before and after the position are calculated and compared with each other to calculate the position having the maximum energy. This position is determined as the DFT window position.

The maximum impulse is detected, and, while the window shifts step by step in the ranges each having the width $\Delta$ and set before and after the maximum impulse, energy amounts in the window are calculated and compared with each other. In this manner, the DFT window position can also be determined.

(e) Another Process of Determining DFT Window Position

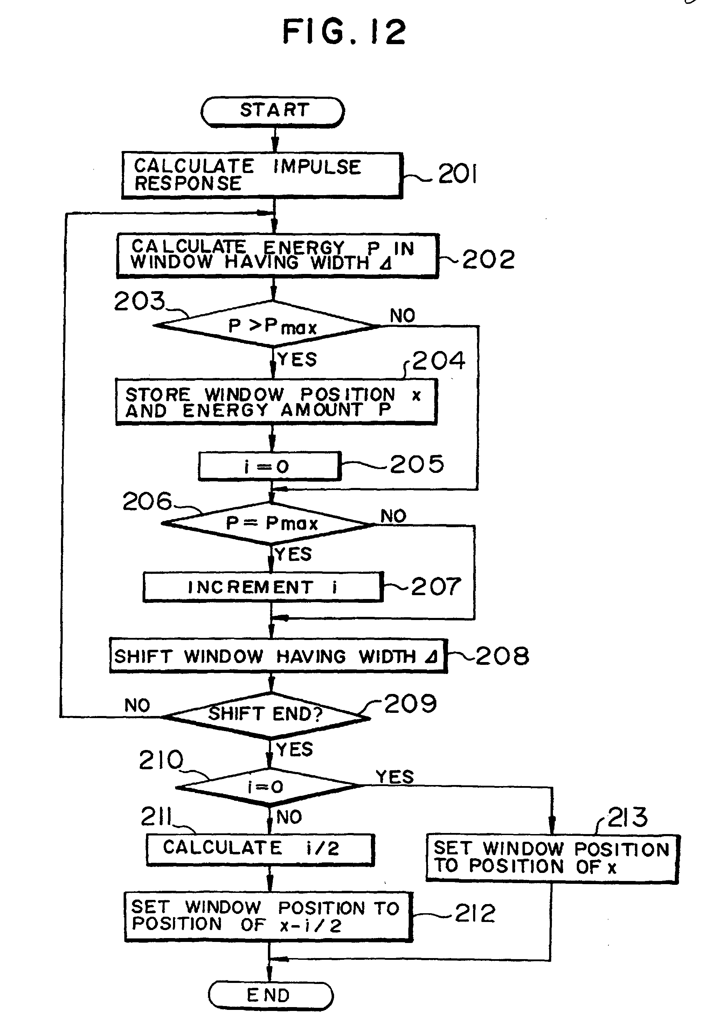

FIG. 12 is a flow chart showing another process of determining a DFT window position.

The impulse response arithmetic section 74 arithmetically operates an impulse response by using the Fourier transformation output X(k) in the PRS window period on the basis of Equation (16), and inputs the arithmetic result to the DFT window generator 65 (step 201). When the DFT window generator 65 receives an impulse response from the impulse response arithmetic section 74, the DFT window generator 65 sets the start edge of the window 52 (see FIG. 8) having the guard interval width $\Delta$ to a position ($\Delta + \alpha$) before the start impulse IPL1. At this position, a total sum (energy of the impulse response) P of the amplitudes of all impulses set in the width of the window 52 (step 202) to check whether the energy P is the maximum energy Pmax (initial value of Pmax is 0) or more (step 203). If P > Pmax is established, P $\rightarrow$ Pmax is set, the start edge position x of the window 52 is stored (step 204), and i is set to be 0 (step 205).

If P > Pmax is not established in step 203, it is checked whether P = Pmax (step 206). If P = Pmax is established, i is incremented (step 207), and the position of the window 52 having the width $\Delta$ is shifted to the right by one step (step 208). In step 206, if P $\neq$ Pmax, the position of the window 52 is shifted to the right by one step without incrementing i (step 208).

Thereafter, it is checked whether the shift amount becomes a set value (e.g., 2$\Delta$ + $\beta$) (step 209). If the shift amount does not become the set value, the steps following step 202 are repeated. In this manner, the window positions which indicate the maximum energy Pmax continue (zone between (2) and (3) in FIG. 8), and reference numeral i indicates the width ($\Delta$ - $\tau$) of the continuous zone.

If the shift amount becomes the set value, it is checked whether i = 0 is established (step 210). If i > 0 is established, i/2 is calculated (step 211), and a DFT window signal is generated by using the position represented by x - i/2 as the start edge position of the DFT window (step 212). On the other hand, since i = 0 in step 210 means that the extension of the impulse response is the guard interval width $\Delta$ or more, the DFT window position is determined such that the start edge of the DFT window is located at the position x indicating the maximum energy, and a DFT window signal is generated (step 213).

With the above arrangement, when the extension of the impulse response is the guard interval width $\Delta$ or less, margins for the advance/delay of the impulse can be set to be ($\Delta$ - $\tau$)/2, and the DFT window 51 can sufficiently cope with the next multipath environment change. Therefore, symbol interference with the DFT window 51 can be suppressed. In addition, when the extension of the impulse response is the guard interval width $\Delta$ or more, interference from an adjacent symbol can be minimized.

Although the present invention has been described above with reference to the embodiment, the various changes of the present invention can be effected according to the scope of the invention described in the claims. The present invention does not exclude these changes.

According to the present invention, the DFT window generator has the following arrangement. That is, the DFT window generator sequentially shifts the position of the window having the width $\Delta$ and calculates the energy of impulse response in the window at respective positions to obtain a window position where the maximum energy can be obtained, and the DFT window generator determines a generation timing of the DFT window on the basis of the window position where the maximum energy can be obtained to input the generation timing to the Fourier transformer. Therefore, the DFT window can be set at a position where interference from an adjacent symbol is minimum, and preferable DAB voice can be output even in a multipath generation environment.

Further, according to the present invention, the DFT window generator has the following arrangement. That is, the DFT window sequentially shifts the position of the window having the width $\Delta$ and calculates the energy of impulse response in the window at respective positions to obtain a window position x where the maximum energy can be obtained. When the window positions each indicating the maximum energy continue, the width ($\Delta$ - $\tau$) of the continuous zone is calculated. The position of the window is determined by using the window position x and the width ($\Delta$ - $\tau$) such that the extension range of the impulse response is set at the center of the window having the width $\Delta$, and a generation timing of the DFT window is determined on the basis of the window position to input the generation timing to the Fourier transformer. Therefore, even if a multipath environment changes every moment, the DFT window can be set at a position where the DFT window is not easily interfered by a symbol with respect to the next multipath environment change, and preferable DAB voice can be output even in a multipath generation environment.

**Claims**

**1.** A digital audio broadcast receiver adapted to receive signals in which a frame is constituted by inserting guard intervals each having a width Δ before a phase reference symbol, PRS and each data symbol, 2N digital data constituting the symbols are divided into N groups each having two bits, the first data of each group and the second data of each group are sequentially input to an inverse Fourier transformer as a real-number part and an imaginary-number part, respectively, the real-number part and imaginary-number part output from said inverse Fourier transformer are converted into analog signals, the analog signals are multiplied by a cos wave and a sin wave of a carrier frequency fc, and the multiplication results are synthesized to be radiated in a space as said signals comprising: means (61) for multiplying the received signals by the cos wave and the sin wave of the carrier frequency, an AD converter (62) for converting the multiplication results into digital signals at a predetermined sampling frequency a Fourier transformer (66) into which the digital signals are inputted, and a real-number part and an imaginary-number part output from said Fourier transformer (66) are outputted as the first and second data,

**characterized by** comprising:

a DFT window generator (65) for generating a DFT window serving as a Fourier transformation execution timing of each symbol to input the DFT window to said Fourier transformer (66); and
an impulse response arithmetic section (74) for arithmetically operating impulse response of a transmission path on the basis of a Fourier transformation output of the phase reference symbol;

wherein said DFT window generator (65) is adapted for sequentially shifting the position of the window having the width Δ, for calculating the energy of impulse response in the window at respective positions to obtain a window position x where the maximum energy can be obtained, for calculating the width (Δ-τ) of a continuous zone within which window positions indicating the maximum energy (Pmax) continue, for determining the position of the window such that an extension range of impulse response is located at the window center of the width Δ by using the window position x and the width of the continuous zone, and for determining a generation timing of the DFT window on the basis of the window position to input the generation timing to said Fourier transformer (66).

2. A digital audio broadcast receiver according to claim 1, **characterized in that** said DFT window generator (65), when it receives an impulse response result is adapted to set the start edge of the window having the guard interval width to a position slightly before the position of a start impulse, and, at this position, to calculate energy of impulse response set in the width of the window.

3. A digital audio broadcast receiver according to claim 1 or 2, **characterized in that** the energy of the impulse response is the total sum of amplitudes of all impulses set in the width of the window.

4. A digital audio broadcast receiver according to claim 1, 2 or 3, **characterized in that** said DFT window generator (65) is adapted to sequentially shift the position of the window having the width Δ and to check whether the energy of the impulse response set in the width of the window is not less than the maximum energy, if the energy is not less than the maximum energy, to set the energy as the maximum energy, and to repeat a process of storing the start edge position x of the window until a predetermined shift amount is obtained.

5. A digital audio broadcast receiver according to any of claims 1 to 4, **characterized in that** the phase reference symbol indicates a PRS window period.


**Patentansprüche**

1. Digitaler Audio-Rundfunkempfänger, ausgebildet zum Empfang von Signalen, in denen ein Rahmen gebildet wird durch Einfügen von Schutzintervallen mit jeweils einer Breite von Δ vor einem Phasenreferenzsymbol PRS und jedem Datensymbol, wobei 2N digitale Daten, die die Symbole bilden, in N Gruppen mit jeweils 2 Bits aufgeteilt werden, die ersten Daten jeder Gruppe und die zweiten Daten jeder Gruppe sequentiell in einen Transformator für eine inverse Fourier-Transformation als Realteil bzw. als Imaginärteil eingegeben werden, der von dem Fourier-Transformator für die inverse Fourier-Transformation ausgegebene Realteil und Imaginärteil in Analogsignale umgewandelt werden, die mit einer Cosinuswelle und einer Sinuswelle einer Trägerfrequenz fc multipliziert werden, und die Multiplikationsergebnisse zusammengesetzt werden, um in einen Raum als die Signale abgestrahlt zu werden, umfassend: eine Einrichtung (69) zum Multiplizieren der empfangenen Signale mit der Cosinuswelle und der Sinuswelle der Trägerfrenquenz, einen AD-Wandler zum Umwandeln der Multiplikationsergebnisse in digitale Signale mit einer vorbestimmten Abtastfrequenz, einen Fourier-Transformator (66), in welchen die digitalen Signale eingegeben werden, wobei ein Realteil und ein Imaginärteil von dem Fourier-Transformator (66) als die ersten bzw. die zweiten Daten ausgeben werden,

**EP 0 837 582 B1**

**gekennzeichnet durch**:

einen DFT-Fenstergenerator (55) zum Erzeugen eines DFT-Fensters, das als Fourier-Transformations-Ausführungszeitfenster für jedes Symbol dient für die Eingabe des DFT-Fensters in den Fourier-Transformator (66);

einen Impulsantwort-Arithmetikteil (74) zum arithmetischen Verarbeiten einer Impulsantwort eines Übertragungswegs auf der Grundlage einer Fourier-Transformation, die sich aus dem Phasenreferenzsymbol ergibt; wobei der DFT-Fenstergenerator dazu ausgebildet ist, sequentiell die Stellung des eine Breite $\Delta$ aufweisenden Fensters zu verschieben, die Energie der Impulsantwort in dem Fenster an den jeweiligen Positionen zu berechnen, um eine Fenster-Stellung x zu erhalten, an welcher die maximale Energie erzielbar ist, um die Breite ($\Delta - \tau$) einer durchgehenden Zone von die Maximumenergie (Pmax) anzeigenden fortgesetzten Fensterstellungen zu berechnen, um die Stellung des Fensters in der Weise festzulegen, daß ein Erweiterungsbereich der Impulsantwort sich in der Fenstermitte der Breite $\Delta$ befindet, indem die Fensterposition x und die Breite der kontinuierlichen Zone verwendet werden, und um einen Erzeugungszeitpunkt für das DFT-Fenster auf der Grundlage der Fensterstellung für die Eingabe des Erzeugungszeitfensters in den Fourier-Transformator (66) zu bestimmen.

2. Empfänger nach Anspruch 1, **dadurch gekennzeichnet, daß** der DFT-Fenstergenerator (65), wenn er ein Impulsantwort-Ergebnis empfängt, dazu ausgebildet ist, die Startflanke des Fensters mit der Schutzintervallbreite auf eine Stelle kurz vor der Stelle eines Startimpulses einzustellen, und an dieser Stelle die Energie der Impulsantwort zu berechnen, die in der Breite des Fensters eingestellt ist.

3. Empfänger nach Anspruch 1 oder 2, **dadurch gekennzeichnet, daß** die Energie der Impulsantwort die Gesamtsumme der Amplituden sämtlicher in der Breite des Fensters eingestellter Impulse ist.

4. Empfänger nach Anspruch 1, 2 oder 3, **dadurch gekennzeichnet, daß** der DFT-Fenstergenerator (65) dazu ausgebildet ist, sequentiell die Stellung des Fensters mit der Breite $\Delta$ zu verschieben und zu prüfen, ob die Energie der Impulsantwort, die in der Breite des Fensters eingestellt ist, nicht kleiner ist als die Maximumenergie, wenn die Energie nicht kleiner als die Maximumenergie ist, die Energie als die Maximumenergie einzustellen, und einen Prozess des Speicherns der Stellung x der Startflanke des Fensters solange zu wiederholen, bis ein vorbestimmter Verschiebungshub erreicht ist.

5. Empfänger nach einem der Ansprüche 1 bis 4, **dadurch gekennzeichnet, daß** das Phasenreferenzsymbol eine PRS-Fensterperiode angibt.

**Revendications**

1. Récepteur de diffusion audio numérique adapté pour recevoir des signaux, dans lequel une trame est constituée par l'insertion d'intervalles de garde, ayant chacun une largeur $\Delta$ devant un symbole de référence de phase, PRS, et devant chaque symbole de données, 2N données numériques constituant les symboles sont divisées en N groupes chacun ayant deux bits, la première donnée de chaque groupe et la deuxième donnée de chaque groupe sont séquentiellement entrées dans un transformateur de Fourier inverse en tant que partie réelle et partie imaginaire, la partie réelle et la partie imaginaire en sortie dudit transformateur de Fourier inverse sont converties en signaux analogiques, les signaux analogiques sont multipliés par une onde co-sinusoïdale et par une onde sinusoïdale d'une fréquence porteuse fc, et les résultats de la multiplication sont synthétisés pour être émis dans un espace, en tant que signaux, comprenant des moyens (61) pour multiplier les signaux reçus par l'onde co-sinusoïdale et par l'onde sinusoïdale de la fréquence porteuse, un convertisseur analogique-numérique (62) pour la conversion des résultats de la multiplication en signaux numériques à une fréquence d'échantillonnage prédéterminée, un transformateur de Fourier (66) dans lequel les signaux numériques sont entrés, et une partie réelle et une partie imaginaire sont sorties dudit transformateur de Fourier (66) en tant que première et deuxième données, **caractérisé en ce qu'**il comprend :

- un générateur de fenêtre DFT (65) pour générer une fenêtre DFT servant de synchronisation d'exécution de transformation de Fourier de chaque symbole et pour entrer la fenêtre DFT dans ledit transformateur de Fourier (66) ; et,
- une section arithmétique de réponse impulsionnelle (74) pour réaliser arithmétiquement la réponse impulsionnelle d'un chemin de transmission en fonction de la sortie de la transformation de Fourier du symbole de référence de phase ;

dans lequel ledit générateur de fenêtre DFT (65) est adapté pour décaler séquentiellement la position de la fenêtre ayant la largeur Δ, pour calculer l'énergie de la réponse impulsionnelle dans la fenêtre à des positions respectives pour obtenir une position de fenêtre x où l'énergie maximum peut être obtenue, pour calculer la largeur (Δ-τ) d'une zone continue alors que le calcul des positions de fenêtre indiquant l'énergie maximum (Pmax) continue, pour déterminer la position de la fenêtre de telle sorte qu'une plage d'extension de la réponse impulsionnelle se trouve au centre de la fenêtre de la largeur Δ en utilisant la position de fenêtre x et la largeur de la zone continue, et pour déterminer une synchronisation de génération de la fenêtre DFT en fonction de la position de la fenêtre pour entrer la synchronisation de génération dans ledit transformateur de Fourier (66).

2. Récepteur de diffusion audio numérique selon la revendication 1, **caractérisé en ce que** ledit générateur de fenêtre DFT (65), lorsqu'il reçoit un résultat de réponse impulsionnelle, est adapté pour régler le front de début de la fenêtre ayant la largeur d'intervalle de garde à une position légèrement avant la position d'une impulsion de début, et, à cette position, pour calculer l'énergie de la réponse impulsionnelle réglée dans la largeur de la fenêtre.

3. Récepteur de diffusion audio numérique selon la revendication 1 ou 2, **caractérisé en ce que** l'énergie de la réponse impulsionnelle est la somme totale des amplitudes de toutes les impulsions situées dans la largeur de la fenêtre.

4. Récepteur de diffusion audio numérique selon la revendication 1, 2 ou 3, **caractérisé en ce que** ledit générateur de fenêtre DFT (65) est adapté pour séquentiellement décaler la position de la fenêtre ayant la largeur Δ, et pour vérifier si l'énergie de la réponse impulsionnelle située dans la largeur de la fenêtre n'est pas inférieure à l'énergie maximum, si l'énergie n'est pas inférieure à l'énergie maximum, pour régler l'énergie en tant qu'énergie maximum, et pour répéter un processus d'enregistrement de la position du front de début x de la fenêtre jusqu'à ce qu'une quantité de décalage prédéterminée soit obtenue.

5. Récepteur de diffusion audio numérique selon l'une quelconque des revendications 1 à 4, **caractérisé en ce que** le symbole de référence de phase indique une période de fenêtre PRS.

# FIG. 1

DAB SIGNAL TRANSMITTER /51 →x(n)→ h(n) /53 TRANS-MISSION PATH →y(n)→ DAB SIGNAL RECEIVER /52

(MULTIPATH)

## FIG. 2A

IMPULSE

n=0

## FIG. 2B

# FIG. 3

N : NUMBER OF
FFT POINTS

# FIG. 4

(n<0 AND n>0 ARE SYMMETRICAL)

# FIG. 5A

# FIG. 5B

# FIG. 6

EXTENSION OF
IMPULSE RESPONSE

(a)

(b)

EP 0 837 582 B1

# FIG. 7

IPC1

IMPULSE
RESPONCE

Δ

52

52

52

51

# FIG. 8A

# FIG. 8B

# FIG. 9

# FIG.10

RESPONSE FREQUENCY CONTROL SIGNAL LINE

BASEBAND ANALOG SIGNAL LINE

BASEBAND DIGITAL SIGNAL LINE

FREQUENCY ERROR COMPONENT EXTRACTOR

VOICE SIGNAL OUTPUT LINE

60

RF SIGNAL DEMODU-LATOR FOR DAB — 61

A/D CONVER-TOR — 62

D(t), I(t)

D(m), I(m)

FOURIER TRANSFOR-MATION/ DIFFER-ENTIAL DECODER — 66

AUDIO SIGNAL DECODER — 67

D/A CON-VERTER — 68

AMPLI-FIER — 69

70

SAMPLING PULSE SIGNAL

NULL SIGNAL DETECTOR — 64

WINDOW

X(k)

IMPULSE RESPONSE ARITHMETIC SECTION — 74

VOLUME CONTROL SIGNAL LINE

63 — SAMPLING PULSE GENERATOR

NDT

DFT WINDOW GENERATOR — 65

PRS WINDOW

CONTROL SIGNAL LINE

CONTROL SIGNAL LINE

73

CONTROLLER

DISPLAY CONTROL SIGNAL LINE

71 — DAB RECEPTION OPERATION KEY

DISPLAY UNIT — 72

EP 0 837 582 B1

EP 0 837 582 B1

# FIG. 11

```
                    ┌─────────────┐
                    │    START    │
                    └─────────────┘
                           │
                           ▼
        ┌─────────────────────────────────────┐
        │ SET  START  EDGE  OF  WINDOW         │
        │ HAVING  WIDTH  Δ  AT  START          │─ 101
        │ IMPULSE  POSITION                    │
        └─────────────────────────────────────┘
                           │
                           ▼
        ┌─────────────────────────────────────┐
        │ CALCULATE  ENERGY  P OF             │
        │ IMPULSE  RESPONSE  IN WINDOW        │─ 102
        │ HAVING  WIDTH  Δ                    │
        └─────────────────────────────────────┘
                           │          ┌ 103
                           ▼
                  ⟨  P > Pmax ?  ⟩──────── NO ──────┐
                           │ YES                    │
                           ▼                        │
        ┌─────────────────────────────────────┐     │
        │ • P→Pmax                            │     │
        │ • STORE  WINDOW  EDGE POSITION      │─ 104│
        │   x  HAVING  WIDTH  Δ  AS FT        │     │
        │ WINDOW  POSITION                    │     │
        └─────────────────────────────────────┘     │
                           │◄────────────────────────┘
                           ▼
        ┌─────────────────────────────────────┐
        │ SHIFT  WINDOW  HAVING  WIDTH  Δ     │─ 105
        └─────────────────────────────────────┘
                           │
                           ▼                106
            NO ────── ⟨  SHIFT END?  ⟩
            │                │ YES
            │                ▼
            │    ┌─────────────────────────────────┐
            │    │ SET  START  EDGE  OF  FT WINDOW │─ 107
            │    │ TO  x                           │
            │    └─────────────────────────────────┘
            │                │
            │                ▼
            │           ┌─────────────┐
            │           │    END      │
            │           └─────────────┘
            └──────────────────────────────────────
```

# FIG. 12

```
                    ┌──────────┐
                    │  START   │
                    └──────────┘
                         │
                         ▼
            ┌─────────────────────────┐
            │  CALCULATE  IMPULSE     │─── 201
            │  RESPONSE               │
            └─────────────────────────┘
                         │
                         ▼
            ┌─────────────────────────┐
            │ CALCULATE ENERGY P IN   │─── 202
            │ WINDOW HAVING WIDTH Δ   │
            └─────────────────────────┘
                         │
      203                ▼
            ◇─────────────────────────◇   NO
            ◇        P > Pmax         ◇──────┐
            ◇─────────────────────────◇      │
                    │ YES        204         │
                    ▼                        │
            ┌─────────────────────────┐      │
            │ STORE WINDOW POSITION x │      │
            │ AND ENERGY AMOUNT P     │      │
            └─────────────────────────┘      │
                         │                   │
                         ▼                   │
                 ┌──────────────┐            │
                 │    i = 0     │─── 205     │
                 └──────────────┘            │
                         │◄──────────────────┘
      206                ▼
            ◇─────────────────────────◇   NO
            ◇        P = Pmax         ◇──────┐
            ◇─────────────────────────◇      │
                    │ YES                     │
                    ▼                         │
            ┌─────────────────────────┐       │
            │     INCREMENT  i        │─── 207 │
            └─────────────────────────┘       │
                         │◄──────────────────┘
                         ▼
            ┌─────────────────────────┐
            │ SHIFT WINDOW HAVING WIDTH Δ │─── 208
            └─────────────────────────┘
                         │
      NO                 ▼
    ┌────────◇──────────────────────◇   209
    │        ◇      SHIFT END?       ◇
    │        ◇──────────────────────◇
    │                 │ YES
    │      210        ▼
    │        ◇──────────────────◇   YES
    │        ◇      i = 0       ◇────────┐
    │        ◇──────────────────◇        │
    │  211          │ NO                 │  213
    │        ┌──────────────┐    ┌──────────────────────┐
    │        │ CALCULATE i/2│    │ SET WINDOW POSITION  │
    │        └──────────────┘    │ TO POSITION OF x     │
    │                │           └──────────────────────┘
    │                ▼                   │
    │ ┌──────────────────────┐          │
    │ │ SET WINDOW POSITION TO│─── 212   │
    │ │ POSITION OF x-i/2     │          │
    │ └──────────────────────┘          │
    │                │                   │
    │                ▼◄──────────────────┘
    │          ┌──────────┐
    │          │   END    │
    │          └──────────┘
    └──────────►(back to 202)
```

# FIG. 13

SERIAL DATA : d(n)

S/P CONVERTER

MUX

EQUAL TO 4ΦPSK

$\cos \omega_0 t$

$-\sin \omega_0 t$

$\cos \omega_{N-1} t$

$-\sin \omega_{N-1} t$

a(0), b(0), a(1), b(1) ....

$f_s = \dfrac{2}{\Delta t}$ $\left(\begin{array}{c}\text{TRANS-}\\\text{MISSION}\\\text{RATE}\end{array}\right)$

a(0) b(0) a(1) b(1) ....

a(0) b(0) a(1) b(1) ....

$\Delta t$

t

a(0)  b(0)  a(N-1)  b(N-1)

D(l)

$$D(l) = \sum_{n=0}^{N-1} \{a(n)\cos\omega_n t + b(n)\sin\omega_n t\}$$

$$\left(\begin{array}{l}\omega_n = 2\pi f_n \\ f_n = f_0 + n\Delta f \\ \Delta f = \dfrac{1}{N\Delta t}\end{array}\right.$$

FIG. 14

# FIG. 15

$$f_s = \frac{2}{\Delta t}$$

a(0)  b(0)  a(1)  b(1)  a(2)  b(2)          a(N-1) b(N-1)

$\Delta t$

$Ts = N\Delta t$
SYMBOL  LENGTH : Ts
2 × N  BITS / Ts (SYMBOL)

2 × N BITS    2 × N BITS    2 × N BITS

Ts          Ts          Ts

31

# FIG. 16

# FIG. 17

# FIG. 18A

# FIG. 18B

# FIG. 19

TRANSMISSION DATA

$d(k)$

IDFT **11**

REAL-NUMBER PART $D(m)$

D/A **12a**

LPF **13a**

$D(t)$

$\cos \omega_c t$

FREQUENCY CONVERTER **14a**

$S(t)$

$I(m)$ IMAGINARY-NUMBER PART

$d(k) = a(k) + jb(k)$

$a(k)$ AND $b(k)$ ARE 1 OR -1

$f_0$ ...... $f_{N-1}$ → f

$\Rightarrow$

$f_0 + f_c$ ...... $f_{N-1} + f_c$ → f

# FIG.20A

$D(t)$

$t$

# FIG. 20B

$N\Delta f$

$f_0$         $f_{N-1}$

# FIG.21

$s(t)$ $\oplus$ $r(t)$

$n(t)$

FREQUENCY
CONVERTER

15

$\hat{D}(t)$ → LPF 16a → A/D 17a → $\hat{D}(m)$

$\hat{I}(t)$ → LPF 16b → A/D 17b → $\hat{I}(m)$

DFT 18 → $\hat{d}(k)$

35

# FIG. 22

REAL-
NUMBER
PART
D(m)

cos $\omega c^t$

11 — IDFT

12a — A/D

13a — LPF

14a

D(t)

14

I(m)

IMAGINARY-
NUMBER PART

12b — A/D

13b — LPF

14b

I(t)

14c

H

s(t)

sin $\omega c^t$

OFDM MODULATOR

FREQUENCY
CONVERTER

# FIG. 23

cos $2\pi f_c t$

15a

15b

15c

s(t)

r(t)

BPF

D'(t)

n(t)

15d

I'(t)

-sin $2\pi f_c t$

# FIG. 24

$$d_l(k) = \frac{D_l(k) \cdot d_{l-1}(k)}{1+j}$$

DIFFERENTIAL ENCODER

$D_l(k) \longrightarrow$ [21] $\longrightarrow d_l(k)$

$$D_l(k) = A_l(k) + jB_l(k) \qquad d_l(k) = a_l(k) + jb_l(k)$$

| $D_0(k)$ | $D_1(k)$ | $D_2(k)$ | $D_3(k)$ | TRANSMISSION DATA |
|---|---|---|---|---|
| $d_0(k)$ | $d_1(k)$ | $d_2(k)$ | $d_3(k)$ | MODULATOR INPUT SIGNAL |
| $k=0\sim N-1$ | $k=0\sim N-1$ | $k=0\sim N-1$ | $k=0\sim N-1$ | |
| $l=0$ | $l=1$ | $l=2$ | $l=3$ | |

$\longleftarrow$ Ts $\longrightarrow$

# FIG. 25

DEMODULATOR $\xrightarrow{d_l(k)}$ [22] $\quad D_l(k) = (1+j)\dfrac{d_l(k)}{d_{l-1}(k)}$

DIFFERENTIAL ENCODER

$\longrightarrow D_l(k)$

EP 0 837 582 B1

## FIG. 26A

## FIG. 26B

# FIG. 27

# FIG. 28

(a) DIRECT WAVE — SYMBOL B — SYMBOL C

(b) REFLECTIVE WAVE 1 — SYMBOL A — SYMBOL B — SYMBOL C

(c) REFLECTIVE WAVE 2 — SYMBOL A — SYMBOL B

(d) REFLECTIVE WAVE 3 — SYMBOL A — SYMBOL B

(e) SYNTHESIZED WAVE — SYMBOL B

FFT WINDOW WDW

OBSERVE RECEPTION WAVEFORM IN THIS ZONE (Ts)

: INTER-SYMBOL INTERFERENCE

EP 0 837 582 B1